# EUROPEAN PATENT SPECIFICATION

(11) **EP 2 792 435 B1**
(45) Date of publication and mention of the grant of the patent: **30.03.2016**
(21) Application number: 11819099.0
(22) Date of filing: 12.12.2011
(51) Int. Cl.: B22D 31/00, B25J 9/16, G05B 19/418

(54) **METHOD AND SYSTEM FOR SEPARATING CAST PARTS FROM CLUSTERS OBTAINED BY MEANS OF CASTING PROCESSES**
PROCEDIMIENTO Y SISTEMA PARA SEPARAR PIEZAS DE FUNDICIÓN DE RACIMOS OBTENIDOS MEDIANTE PROCESOS DE FUNDICIÓN
PROCÉDÉ ET SYSTÈME DE SÉPARATION DE PIÈCES DE FONDERIE DE GRAPPES OBTENUES AU MOYEN DE PROCESSUS DE FONDERIE

(43) Date of publication of application: 22.10.2014
(73) Proprietor: FUNDACIÓN TECNALIA RESEARCH & INNOVATION, 20009 San Sebastian (Guipuzcoa) (ES)
(72) Inventor: LOPEZ GONZALEZ, Jesus, Maria, E-20009 San Sebastian (Guipúzcoa) (ES); ANDRES ALONSO, Maite, E-20009 San Sebastian (Guipúzcoa) (ES); ARMENTIA ORTIZ, Jorge, E-20009 San Sebastian (Guipúzcoa) (ES); DURO RODRIGUEZ, Gorka, E-20009 San Sebastian (Guipúzcoa) (ES); PEREZ LARRAZABAL, Jose, E-20009 San Sebastian (Guipúzcoa) (ES); DEL POZO ROJO, Dionisio, E-20009 San Sebastian (Guipúzcoa) (ES); PEDRERO IÑIGUEZ, Juan, Manuel, E-20009 San Sebastian (Guipúzcoa) (ES); CABALLERO OGUIZA, Patricia, E-20009 San Sebastian (Guipúzcoa) (ES); BELOKI ZUBIRI, Oihane, E-20009 San Sebastian (Guipúzcoa) (ES); COLLADO JIMENEZ, Valentín, E-20009 San Sebastian (Guipúzcoa) (ES)
(74) Representative: Carpintero Lopez, Francisco
(86) International application number: PCT/ES2011/070851
(87) International publication number: WO 2013/087947

(56) References cited:
- JP-A- 4 071 769
- JP-A- 2010 234 431

## Description

### Technical Field of the Invention

The present invention is comprised in the technical field of the iron and steel industry and, particularly, in the sector of separating parts from sets of parts manufactured by casting supported by a common structure (clusters).

### Background of the Invention

Casting clusters usually comprise pouring cups or gates, feeder lines, risers and cast parts which can be attached to a riser and/or to a feeder line. The filling cups, feeder lines and risers are conduits and cavities through which the molten material in the mold has flowed to form the cast parts. The feeder lines can comprise a connection branch communicated with the gate and side and secondary lines which feed the cast parts or the risers. The manufacture of cast parts in molds in which the cast parts are obtained in clusters requires separating the cast parts from the risers or feeder lines at determined cutting points, for which cutting tools are normally used.

This task is normally performed manually, which involves tedious work requiring a great effort by the operator who performs the task. These operators are subjected to noise and fumes present in the installation, work in a non-ergonomic posture and may be injured due to an incorrect use of the cutting tool, so their work quality is seriously affected. Furthermore, the correct result depends on the experience and on the mood of the worker.

Sometimes dies are used which are specifically designed to automatically separate the parts from the rest of the cluster; however the presence of abrasive sand on then parts greatly minimizes the service life of the dies, entailing very high maintenance times not suited for daily production. On the other hand, there are a large number of references, making it necessary to design and acquire a specific die for each of them, so the profitability thereof is seriously questioned.

In view of the aforementioned problems and due to the large variety of parts of this type, it is laborious to determine for each part the access points of the tool as well as the cutting and entering angle thereof which allow a precise and accurate separation of the cast parts from the clusters and more specifically from the risers or from the feeder lines to which they are attached, which is essential for automating the separation of the cast parts from the cluster (from the riser or, where appropriate, from the feeder lines) to which they are attached.

Although various systems for separating cast parts from their clusters which attempt to mitigate this laboriousness have been designed, such as those described in patent documents JP2000225459(A), JP2000317622(A), FR2907039(A1), FR2901161(A1), WO9738822(A1) and US6364032(B1), currently none of these systems allows an automated operation which allows reducing that laboriousness, maintaining the flexibility of the manual process and simultaneously assuring the performance of the precise cuts at the points which are specifically required for each specific part in order to efficiently separate the cast parts from the clusters.

Patents JP 2010 234431 A and JP 4 071769A are also known, which provide an automatic solution for carrying out this task based on vision and robotics. In any case, these systems entail the robotic system programming need by means of teaching. This laborious programming must be done for each of the existing references, and every time a new reference is added to production, which entails very high commissioning times that can only be carried out by specific personnel.

Therefore, the method of the invention is an advance in terms of flexibility, since it automatically calculates the cutting points for each specific part individually, regardless of the position or orientation in which the cluster is located and of the type of part in question. This solves problems such as the deformation of the feeder lines during the solidification process or the existence of an excessively large number of references as occurs with the use of dies, for example. Furthermore, it is not necessary to stop the production every time the type of part is changed, it being possible to work with several references simultaneously. On the other hand, the method of the invention entails shorter commissioning times than the automatic solutions present up until now and eliminates the need for expert personnel, even the worker being able to configure the system, without needing to perform a prior teaching programming on the robotic system. Finally, the method of the invention further allows human intervention for selecting or correcting said points if necessary, through a human-machine interface. It is thus the operator himself who selects the angle of the tool and the cutting point and guides such tool towards the desired point during the industrial process without needing to reprogram the system or physically intervene in the working area of the tool.

### Description of the Invention

The object of the present invention is to overcome the drawbacks of the state of the art detailed above by means of a method and a system for separating cast parts from clusters obtained by means of casting processes,
the cluster comprising a pouring cup, feeder lines, cast parts and feeding risers. In the scope of the present invention, clusters are understood as both complete clusters and incomplete clusters (a part which has become detached from the cluster, for example, is missing).

The method of the invention comprises:
a) defining a spatial reference system (X, Y, Z) for a first computer vision system, defining a spatial reference system (X',Y',Z') for a first industrial manipulator in a second working area, and interrelating both spatial reference systems according to the distances (x ,y ,z) separating them and the orientation of each axis;
b) developing a basic programming algorithm for the first industrial manipulator based on movement instructions through parameters;
c) storing data corresponding to the cast parts, feeder lines and risers of the clusters, comprising data of the cutting points for cutting the cast parts from the cluster;
d) placing the cluster in a first working area;
e) obtaining an image of the casting cluster by means of the first computer vision system;
f) processing the image of the cluster obtained by the first computer vision system in phase e) to obtain the orientation of the cast parts and the coordinates of the cutting points according to the data of the image of phase e) and the data stored in c);
g) converting the coordinates of the cutting points and orientation of the parts of the spatial reference system of the first computer vision system (X, Y, Z) to the spatial reference system of the first industrial manipulator (X', Y', Z');
h) determining the entering angle for separating each cast part based on reference entering angle values contained in a database in computer equipment;
i) transmitting the coordinates and orientations calculated and the entering angle of phase h) to the first industrial manipulator which allows confronting the separating system containing at least one separating tool with the cutting point for cutting the cluster, with the suitable orientation and with the determined entering angle. The first manipulator can bear the separating tool in order to apply it on the part which remains still, or the first manipulator can bear the part and take it to the separating tool which is assembled on a structure;
j) securing the cluster in the second working area and separating each cast part from the cluster by means of the separating system in the second working area.

In one embodiment, the method can comprise handling the separating system by the first industrial manipulator. To that end, the separating system will be defined as a work tool. Subsequently, rather than proceeding as usual, programming specific spatial points by means of "teaching", an algorithm is defined which is based on movement instructions through parameters, therefore valid for all existing references.

It can additionally comprise fixing the cluster (for example by means of a fixing implement) on a conveyor system which moves the cluster from the first working area to the second working area, in which the first manipulator with the separating system is located. The cluster can be placed in the first area manually by an operator, for example, or can come from a previous installation. The method comprises calculating the advance distance of the cluster from phase e) to update the cutting coordinates of phase g).

The clusters herein described can be supported on the conveyor system on both faces, i.e., face up and face down. Sometimes one of the faces contains notches or lugs in order to support the separating tool and facilitate the cutting, such that if the separation is performed on the other face of the cluster, it will probably be erroneous. In the following embodiments, the face of the cluster is identified by means of a computer vision system and the data is sent to the industrial manipulator; in the event that the face of the cluster is not the most suitable, the manipulator is responsible for turning it over.

In a second alternative embodiment, the separating system is also handled through the first industrial manipulator, however the second working area is outside the conveyor system. In a third working area (arranged after the first computer vision system), a second manipulator has been provided which transfer the cluster from the third working area to the second working area in which the first manipulator with the separating tool is located.

For transfer, the industrial manipulator could grab, for example, the cluster by the gate, a common part for all the casting clusters, universal and identical for all the references within the same casting, which enables handling different types of references with the same tool, reducing tool change times and costs.

In this embodiment, the first computer vision system is arranged between the first working area and the third working area such that it captures the image of the cluster before the second manipulator transfers the cluster to the second working area for the separation.

In this second embodiment, the method comprises the following phases:
k) defining a spatial reference system (X", Y", Z") for a second industrial manipulator which handles a gripping tool in a third working area, and interrelating the spatial reference system (X", Y", Z") of the second manipulator with the spatial reference system (X, Y, Z) of the first computer vision system according to the distances (x1, y1, z1) separating them and the orientation of each axis;
I) storing data corresponding to a gripping element, comprising data of the gripping point for gripping the casting cluster and the face of the cluster;
and in that it comprises the following phases after phase e) and before phase i):
m) processing the image of the cluster obtained by the first computer vision system in phase e) to obtain the orientation of the cluster, the face of the cluster and the gripping point according to data of the image of phase e) and the data stored in phase l);
n) converting the gripping coordinates and orientation of the cluster of phase m) of the spatial reference system (X, Y, Z) of the first computer vision system to the spatial reference system (X", Y", Z") of the second industrial manipulator;
o) transmitting the gripping coordinates, face of the cluster and the orientation of the cluster of phase m) to the second industrial manipulator to grip the cluster by the gripping element. Face of the cluster is understood as transmitting the data of the first or second face of the cluster which remains opposite the separating tool and therefore on which the separating tool will act;
p) gripping and turning the cluster over by means of the gripping tool of the second industrial manipulator based on coordinates of phase n), in the third working area;
q) positioning the cluster on the second working area to place the cluster in a determined position and orientation;
and in that it comprises the following phase after phase e) and before phase g):
r) updating the coordinates of the cutting points, orientation of the parts and entering angle according to the face of the cluster and references to gripping coordinates of the first computer vision system

This positioning is necessary so that the first manipulator can separate each cast part based on the data of the image obtained by the first computer vision system. In the first embodiment of the invention described above, this positioning in a determined position and orientation of the cluster is not necessary because the clusters are fixed from the first working area to the second working area. The positioning can be done by means of a positioning implement configured to fix the cluster in a determined position and orientation, or the second industrial manipulator could secure the cluster during the cutting operation.

In this embodiment, the conveyor system moving the cluster from the first working area to the third working area and the update of the gripping coordinates of phase n) according to the advance of the cluster on the conveyor system have also been provided.

In a third embodiment, as in the second embodiment, the second working area is outside the conveyor system, and the separating system is handled by the first industrial manipulator and a second manipulator has been provided in the third working area transferring the cluster from the third working area to the second working area where the first manipulator with the separating system is located.

In this third embodiment, the incorporation of a second computer vision system which is arranged between the first working area and the third working area has been provided.

The second computer vision system captures the image of the cluster before the second manipulator transfers the cluster to the second working area for the separation. This second computer vision system is configured to obtain data of the cluster which allow obtaining the face of the cluster, the coordinates of the gripping point and orientation of the cluster.

Possible deviations in the coordinates of the cutting points and orientation of the parts due to the handling of the cluster by the second industrial manipulator are thus prevented.

In this embodiment, the first computer vision system is arranged before the second working area and after the third working area, the first vision system being outside the conveyor system, and is configured to obtain data of the cluster which allow obtaining the coordinates of the cutting points and orientation of the parts. In this embodiment, a positioning of the clusters as in the second embodiment is not necessary because this phase is prior to the phase for processing the image of the cluster by the first computer vision system.

The cluster could be secured in the second working area by means of a fixing implement preventing the cluster from moving during the separation operation. In this case, the second working area can comprise a cluster delivery area for the delivery by means of the second manipulator and a separation area for the separation by the first manipulator, the first computer vision system being arranged between both. In this case, there may be an additional conveyor system which moves the cluster from the delivery area to the separation area and can comprise fixing the cluster in the delivery area.

The cluster could also be secured through the second industrial manipulator to prevent the cluster from moving during the separation operation. In this case, the second working area will have a single area where the first computer vision system is located and the separation operation is performed.

In the third embodiment of the invention, the method comprises the following phases:
k1) defining a spatial reference system (X", Y", Z") for a second industrial manipulator which handles a gripping tool in a third working area, defining a spatial reference system (X"', Y"', Z"') for a second computer vision system arranged between the first working area and the third working area, and interrelating both reference systems according to the distances (x1,y1,z1) separating them and the orientation of each axis;
l1) storing data corresponding to a gripping element, comprising data of the gripping point for gripping the casting cluster and face of the cluster;
and in that it comprises the following phases after phase d) and before phase e):
m1) obtaining an image of the casting cluster by means of the second computer vision system;
n1) processing the image of the cluster obtained by the second computer vision system in phase m1) to obtain the face of the cluster, the orientation of the cluster and the coordinates of the gripping point according to data of the image of phase m1) and the data stored in phase l1);
o1) converting the coordinates of the gripping point and orientation of the cluster of phase n1) of the spatial reference system (X"', Y"', Z"') of the second computer vision system to the spatial reference system (X", Y", Z") of the second industrial manipulator;
p1) transmitting the coordinates calculated in o1), orientation of the cluster and the face of the cluster to the second industrial manipulator to grip the cluster at the gripping point;
q1) gripping and turning the cluster over according to the face of the cluster by means of the gripping tool of the second industrial manipulator based on coordinates of phase o1), in the third working area;
r1) positioning the cluster on the second working area in an undetermined orientation.

Obtaining the image by means of the second computer vision system in phase m1) is performed once the cluster has been placed in phase d) and before the gripping phase q1) in the third working area and obtaining the image by means of the first computer vision system in phase e) is performed in the second working area after phase r1) and before the separation of phase j).

It has also been provided in this embodiment for the conveyor system to move the cluster from the first working area to the third working area and to update the gripping coordinates of phase o1) according to the advance of the cluster on the conveyor system.

In a fourth embodiment, the separating system is located on a structure in the second working area, which can be external to the conveyor system or not. The first industrial manipulator, which handles a gripping tool, transfers the cluster from the third working area to the second working area and positions the cluster under the separating system in the position, orientation and under the entering angle calculated for each of the separating points, securing the cluster during the cutting phase for correct separation of the parts.

In this embodiment the first computer vision system is arranged between the first working area and the third working area such that it captures the image of the cluster before the first manipulator transfers the cluster to the second working area for the separation.

In this fourth embodiment, the method comprises the following phases:
k2) defining a second spatial reference system (X"', Y"', Z"') located at the origin of the separating system for the first industrial manipulator;
12) storing data corresponding to a gripping element, comprising data of the gripping point for gripping the casting cluster, and face of the cluster;
and in that it comprises the following phases after phase e) and before phase g):
m2) processing the image of the cluster obtained by the first computer vision system in phase e) to obtain the face of the cluster, orientation of the cluster and the gripping point according to data of the image of phase e) and the data stored in phase l2);
n2) converting the gripping coordinates and orientation of the cluster of phase m2) of the spatial reference system (X, Y, Z) of the first computer vision system to the spatial reference system (X', Y', Z') of the first industrial manipulator;
o2) transmitting the gripping coordinates, face of the cluster and orientation of the cluster to the first industrial manipulator to grip the cluster by the gripping element;
p2) gripping and turning the cluster over according to the face of the cluster by means of the gripping tool handled by the first industrial manipulator based on coordinates of phase n2) in a third working area;
and in that it comprises the following phase after phase g) and before phase i):
q2) converting the coordinates of the cutting points, orientation of the parts and entering angle of the spatial reference system (X', Y', Z') of the first industrial manipulator to the second spatial reference system (X"', Y"', Z"') of the first industrial manipulator referenced to the separating system;
and in that it comprises the following phase after phase i) and before phase j):
r2) positioning the separating points for separating the cluster under the separating system in the second working area according to separation coordinates, orientation of the parts and entering angle.

Obtaining the image by means of the first computer vision system in phase e) is performed once the cluster has been placed in phase d) and before the gripping phase p2) in the third working area.

It has also been provided in this embodiment for the conveyor system to move the cluster from the first working area to the third working area and to update the gripping coordinates of phase n2) according to the advance of the cluster on the conveyor system.

In a fifth embodiment, like in the fourth embodiment, the separating system is located on a structure in the second working area, which can be external to the conveyor system or not, and the first industrial manipulator, which handles a gripping tool, transfers the cluster from the third working area to the second working area and positions the cluster under the separating system in the position, orientation and under the entering angle calculated for each of the separating points, securing the cluster during the cutting phase for correct separation of the parts.

In this fifth embodiment, the incorporation of a second computer vision system which is arranged between the first working area and the third working area has been provided.

The second computer vision system captures the image of the cluster before the second manipulator transfers the cluster to the second working area for the separation. This second computer vision system is configured to obtain data of the cluster which allow obtaining the face of the cluster, the coordinates of the gripping point and orientation of the cluster.

In this embodiment the first computer vision system is arranged before the second working area and after the third working area and is configured to obtain data of the cluster which allow obtaining the coordinates of the cutting points and orientation of the parts.

Possible deviations in the coordinates of the cutting points and orientation of the parts due to the handling of the cluster by the first industrial manipulator are thus prevented.

In the fifth embodiment of the invention the method comprises the following phases:
k3) defining a spatial reference system (X", Y", Z") for a second computer vision system which is arranged between the first working area and the third working area and interrelating the spatial reference system (X", Y", Z") of the second computer vision system with the spatial reference system (X', Y', Z') of the first industrial manipulator according to the distances (x1,y1,z1) separating them and the orientation of each axis, and defining a second spatial reference system (X"', Y"', Z"') located at the origin of the separating system for the first industrial manipulator;
l) storing data corresponding to a gripping element, comprising data of the gripping point for gripping the casting cluster and face of the cluster;
and in that it comprises the following phases after phase d) and before phase e):
m3) obtaining an image of the casting cluster by means of the second computer vision system;
n3) processing the image of the cluster obtained by the second computer vision system in phase m3) to obtain the face and orientation of the cluster and the coordinates of the gripping point according to data of the image of phase m3) and data stored in phase 13);
o3) converting the coordinates of the gripping point and orientation of the cluster of the spatial reference system (X", Y", Z") of the second computer vision system to the spatial reference system (X', Y', Z') of the first industrial manipulator;
p3) transmitting the gripping coordinates, face of the cluster and orientation of the cluster to the first industrial manipulator to grip the cluster by the gripping element;
q3) gripping and turning the cluster over according to the face of the cluster by means of the gripping tool handled by the first industrial manipulator based on coordinates of phase o3) in a third working area;
and in that it comprises after phase g) and before phase i):
r3) converting the coordinates of the cutting points, orientation of the parts and entering angle of the spatial reference system (X', Y', Z') of the first industrial manipulator to the spatial reference system (X"', Y"', Z"') of the first industrial manipulator referenced to the separating system;
and in that it comprises the following phase after phase i) and before phase j):
s3) positioning the separating points for separating the cluster under the separating system in the second working area according to separation coordinates, orientation of the parts and entering angle of phase r3);

Obtaining the image by means of the second computer vision system in phase m3) is performed once the cluster has been placed in phase d) and before the gripping phase q3) in the third working area and obtaining the image by means of the first computer vision system in phase e) is performed in the second working area after phase q3) and before the separation of phase j).

It has also been provided in this embodiment for the conveyor system to move the cluster from the first working area to the third working area and to update the gripping coordinates of phase o3) according to the advance of the cluster on the conveyor system.

The method of the invention can comprise, before the data transmitting phase i), the modification by an operator of the coordinates of each cutting point, of the orientation of each part and of the entering angle:
- The manual selection of the cutting point and orientation.
- The entry by means of a keyboard of the desired entering angle.

The method can comprise, before the data transmitting phase o), p1), o2) or p3), the modification by an operator of the orientation coordinates of the cluster and gripping point.

In other words, it may be possible for an operator, through a monitor, to see the data obtained by the system and decide if, in his opinion, they must be used for the separation or if they must be modified (by clicking on the images for example).

The separating system can be configured to allow separating several parts in a single operation by means of several static separating tools. In this embodiment, each separating system is specific for a specific reference. In this embodiment, the method cycle time is greatly reduced, which cycle time is an extremely important parameter for a technologically sound solution to be successful.

The separating system can be configured to allow separating several parts in a single operation by means of several dynamic separating tools. By means of this embodiment, each of the separating tools will be provided with additional elements allowing its movement in different degrees of freedom, such as for example linear screw modules operated by a gear motor, being able to configure the position and orientation thereof according to data received, for example through a PLC, and therefore being able to perform several separations simultaneously. This embodiment allows adapting the separating system to any type of references present in production. In this embodiment, the method cycle time is greatly reduced, which cycle time is an extremely important parameter for a technologically sound solution to be successful.

The method can comprise using one or several separating systems for performing phase j).

The method can comprise, in phase c), storing data corresponding to individual pattern images of distinctive elements of each type of casting cluster, the distinctive element being a cast part or a riser of the cluster. A distinctive element is understood as a part or riser which allows identifying a type of cluster. A type of cluster is understood as all those clusters which are formed by the same type of part (same reference) regardless of the number or arrangement of the parts in the cluster, different types of cluster being considered as those which are formed by different parts. It is also understood that each cluster is formed by parts of a single reference. Depending on the type of cluster the distinctive element can be a cast part or a feeding riser.

The distinctive elements can comprise data of distance between each pattern image and at least one cutting point for cutting a cast part from the cluster. Furthermore, in phase f) it can comprise comparing the image of the cluster obtained by the first computer vision system in phase e) with the individual pattern images of the distinctive elements stored in phase c) and obtaining the position and orientation of the mentioned distinctive element of the cluster with respect to the mentioned image of the cluster and determining the cutting point for cutting each cast part based on position coordinates provided by the first computer vision system and based on cutting coordinates of the pattern image of the distinctive element of the cluster.

The method can comprise, in phases I) and 12), storing data corresponding to individual pattern images of distinctive elements of each type of casting cluster, the distinctive element being a gripping element, as well as differentiating distinctive elements of the face of the cluster.

The distinctive elements can comprise data of distance between each pattern image and at least one gripping point of a gripping element for gripping the cluster. Furthermore, in phases m) and m2) it can comprise comparing the image of the cluster obtained by the first computer vision system in phase e) with the individual pattern images of the distinctive elements stored in phases I) and 12) and obtaining the position and orientation of the mentioned distinctive element of the cluster with respect to the mentioned image of the cluster and determining the gripping point of the gripping element based on position coordinates provided by the first computer vision system and based on coordinates of the gripping point of the pattern image of the distinctive element of the cluster, as well as obtaining the face of the cluster.

The method can comprise, in phases l1) and 13), storing data corresponding to individual pattern images of distinctive elements of each type of casting cluster, the distinctive element being a gripping element, and differentiating elements of the face of the cluster.

The distinctive elements can comprise data of distance between each pattern image and at least one gripping point of a gripping element for gripping the cluster. Furthermore, in phases n1) and n3) it can comprise comparing the image of the cluster obtained by the second computer vision system in phases m1) and m3) with the individual pattern images of the distinctive elements stored in phases l1) and 13) and obtaining the position and orientation of the mentioned distinctive element of the cluster with respect to the mentioned image of the cluster and determining the gripping point of the gripping element based on position coordinates provided by the second computer vision system and based on coordinates of the gripping point of the pattern image of the distinctive element of the cluster, as well as the face of the cluster.

The method can comprise using a morphological analysis in which in phase c) it comprises storing data of distance between any one point of the contour of the cluster and the cutting points for cutting a cast part from the cluster. Likewise, in phase f) it comprise processing the image to remove unwanted portions of the image and obtaining information about the contour and morphology of the part. It also comprises obtaining the position and orientation of each cast part in pixels according to the information obtained in phase f) and data stored in phase c).

### Brief Description of the Drawings

Aspects and embodiments of the invention are described below on the basis of several drawings, in which
Figure 1 schematically illustrates a first embodiment of the method of the invention.
Figure 2 illustrates a possible installation for carrying out the method of the invention of the embodiment of Figure 1.
Figure 3 illustrates an alternative installation for carrying out the method of the invention of the embodiment of Figure 1.
Figure 4 schematically illustrates a second embodiment of the method of the invention.
Figure 5 illustrates a possible installation for carrying out the method of the invention of the embodiment of Figure 4.
Figure 6 illustrates a possible installation for carrying out the method of the invention of the embodiment of Figure 4, in which the first industrial manipulator acts as a securing element for securing the clusters during the cutting process.
Figure 7 schematically illustrates a third embodiment of the method of the invention.
Figure 8 illustrates a possible installation for carrying out the method of the invention of the embodiment of Figure 7.
Figure 9 illustrates a possible installation for carrying out the method of the invention of the embodiment of Figure 7 in which the first manipulator acts as a securing element for securing the clusters during the image capture process by means of the first computer vision system.
Figure 10 illustrates a fourth embodiment of the method of the invention in which the separating system is supported by a structure.
Figure 11 illustrates a fifth embodiment of the method of the invention in which the separating system is supported by a structure and a second computer vision system has been provided between the first and third working areas.
Figure 12 illustrates an embodiment of a cluster to which the present invention, the global reference system, the recognition of the gripping area and of a part contained in the cluster as well as the coordinates calculated by the computer vision system in the cluster can be applied.
Figure 13 shows the assignment of the entering angle of the cutting element based on stored data.
Figure 14 schematically shows an embodiment of an image taken of a first face of a real cluster.
Figure 15 schematically shows an embodiment of an image taken of a second face of a real cluster.
Figure 16 schematically shows an embodiment of a preprocessed image based on the real image of Figure 14, to remove noise and improve the image.
Figure 17B schematically shows an embodiment of a pattern image corresponding to one of the small risers shown in Figure 16.
Figure 17C schematically shows an embodiment of a pattern image corresponding to one of the large risers shown in Figure 16.
Figure 17D schematically shows an embodiment of a pattern image corresponding to the pouring cup shown in Figure 16.
Figure 17E schematically shows an embodiment of a corresponding pattern image of one of the cast parts shown in Figure 16.
Figure 18B schematically shows an image of the cutting point assigned to the pattern image shown in Figure 17B.
Figure 18C schematically shows an image of the cutting point assigned to the pattern image shown in Figure 17C.
Figure 18D schematically shows an image of the gripping point assigned to the pattern image shown in Figure 17D.

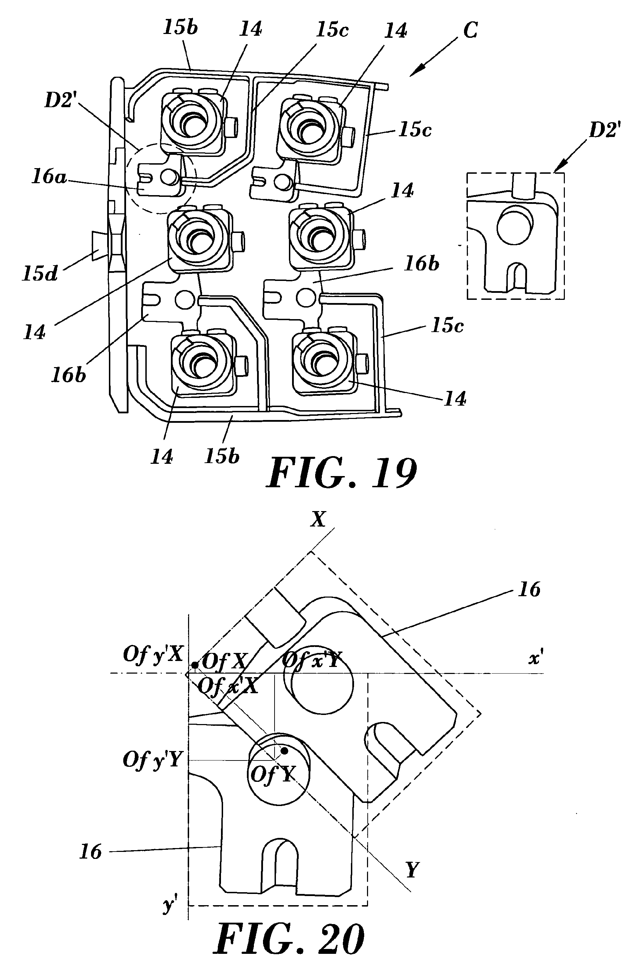

Figure 19 schematically shows the identification of a small riser present in the processed image of a real cluster based on the pattern image of the real riser.
Figure 20 schematically shows the calculation of the cutting point based on the information returned by the computer vision system.
Figure 21 shows an incomplete cluster.

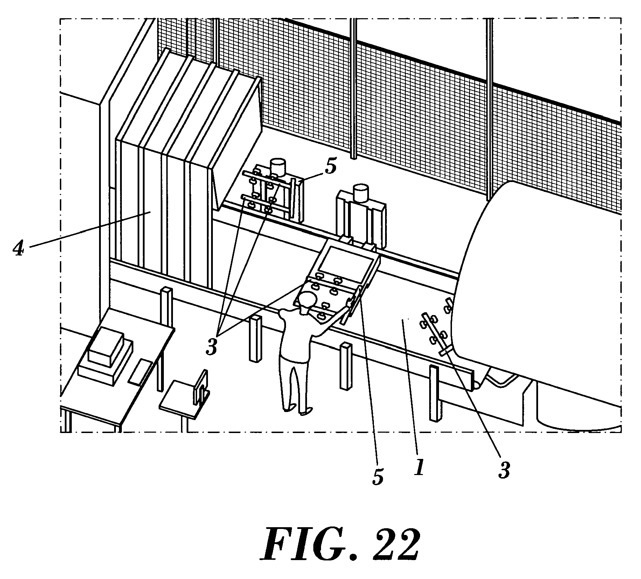

Figure 22 shows the phase for fixing the parts by means of a fixing implement which is horizontal, vertical or at a determined angle.
Figure 23 shows a separating system formed by several separating tools.
Figure 24 shows a separating system formed by several separating tools, in which the separating tools have the possibility of relative movement with respect to one another and of rotation about themselves.

In these figures there are reference numbers identifying the following elements
- 1: first conveyor system
- 1': second conveyor system
- 2: first industrial manipulator
- 3: clusters
- 4: first computer vision system
- 5: fixing implement
- 6: positioning implement
- 7: second manipulator
- 8: separating tool
- 9: gripping tool
- 10: structure/gantry
- 12: second computer vision system
- 13: computer equipment
- 14: cast parts
- 15a: connection branch
- 15b: secondary branches
- 15c: side branches
- 15d: pouring cup
- 16a: small riser
- 16b: large riser
- B: real image of the cluster
- C: processed image of the cluster
- C1: preprocessed image of the cluster
- D2: pattern image of the small riser
- D3: pattern image of the large riser
- D4: pattern image of the pouring cup
- D5: pattern image of the cast part
- 81-84: schematic depiction of separating tools

### Embodiments of the Invention

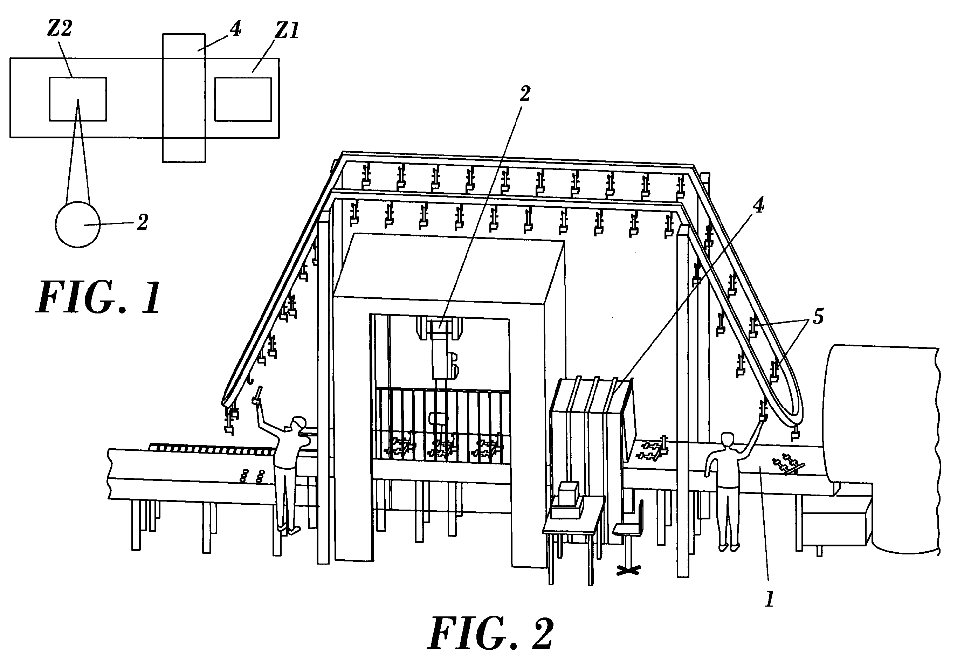

Figures 1 to 11 illustrate possible separation installations for separating parts in which the present invention can be integrated. As can be seen, the clusters (3) of cast parts to be separated reach the separation installation from a previous manufacturing process or by means of an operator.

The cluster (3) will pass through a first computer vision system (4) which captures an image of the cluster. Since it is a static vision system, it can be protected against high temperatures, fumes and sand present in the installation by means of a protective casing, as well as maintain continuous control over the illumination and prevent interferences with the outside. The information obtained by the first computer vision system will be transmitted to computer equipment (13) which will manage the data of the first computer vision system (4). The position of important points with respect to a predetermined reference of a cast part (14) or a riser (16a, 16b) for each type of cluster (3), as well as the entering angle for the separating tool (8) according to the type of part (14), by means of the entry of, for example, pattern images or an electronic model and a database, will be transmitted to the mentioned computer equipment (13) in its start-up. The computer equipment (13) will use the information of the pattern image of the cast part or riser as well as the processed images from the first computer vision system (4) to calculate the optimal access points of the separating tool (8), orientation of the part and entering angle. The computer equipment (13) includes the functionality of displaying, reviewing and modifying, if the operator located in a control station considers it convenient or necessary, the coordinates of the access point of the separating tool (8), the orientation of the part and the entering angle of the tool, using a graphic interface for that purpose.

The calculated coordinates of the separating points and the orientation of the parts, the reference system (X, Y, Z) of the first computer vision system (4) will subsequently be converted to the reference system (X', Y', Z') of a first industrial manipulator (2).

The data will then be transmitted to a first industrial manipulator (2). To that end, an Ethernet or RS-232 communication, for example, could be set up between the computer equipment (13) and the controller of the first industrial manipulator (2).

The cluster (3) can additionally move by means of a conveyor system (1), so the advance of the cluster (3) will be calculated by means of reading pulses of an encoder and the transformation thereof into linear distance. This reading of pulses could be done either from the computer equipment (13) with an I/O card or from the controller of the industrial manipulator with an encoder interface such as DSQC 377 A/B of ABB^{®}.

The first industrial manipulator (2) will perform the necessary movements which allow confronting the separating system containing at least one separating tool (8) with at least one cutting point for cutting the cluster (3), with the suitable orientation and with the determined entering angle in order to perform the separation.

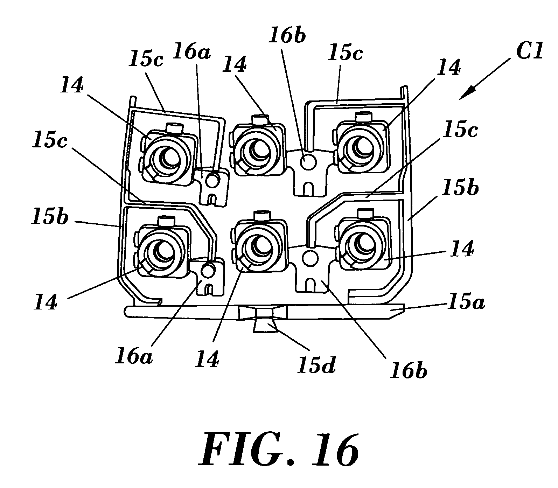

Figures 1, 2 and 3 illustrate a first embodiment of the method (according to claims 1 and 2) of the invention in which there is observed a first working area (z1) in which an operator fixes the clusters by means of a fixing implement (5) in any position on a conveyor system (1), for the purpose of maintaining the cutting coordinates after each separation. The fixing implement (5) will be a universal implement serving to fix different references of cast parts (14). An example of this implement could be a set of magnetized sheets on the conveyor system in which the operator chooses when he wishes to magnetize/demagnetize. Another possible option could be a set of clamps fixing the part by any of the feeder lines. The fixing implement (5) can fix the cluster horizontally on the conveyor system (1) or vertically, as depicted in Figure 16, or at a determined angle.

There are also observed a first computer vision system (4) for obtaining an image of the mentioned cluster (3) and the processing thereof according to phases f) to h) of the method of the invention, and a second working area (z2) in which a first industrial manipulator (2), which handles a separating system containing at least one separating tool for separating the cast parts (14) according to the coordinates of the cutting points, orientation of the parts and entering angle transferred in phase i), can work.

In this embodiment the first computer vision system (4) is arranged after the first working area (z1) and before the second working area (z2). Fixing the cluster (3) by means of the fixing implement (5) is performed manually by an operator. A second operator removing the fixing implement (5) from the cast part (14) once the cluster has been separated and placing it on a carousel conveyor which returns the fixing implement to the first working area (z1) has also been depicted.

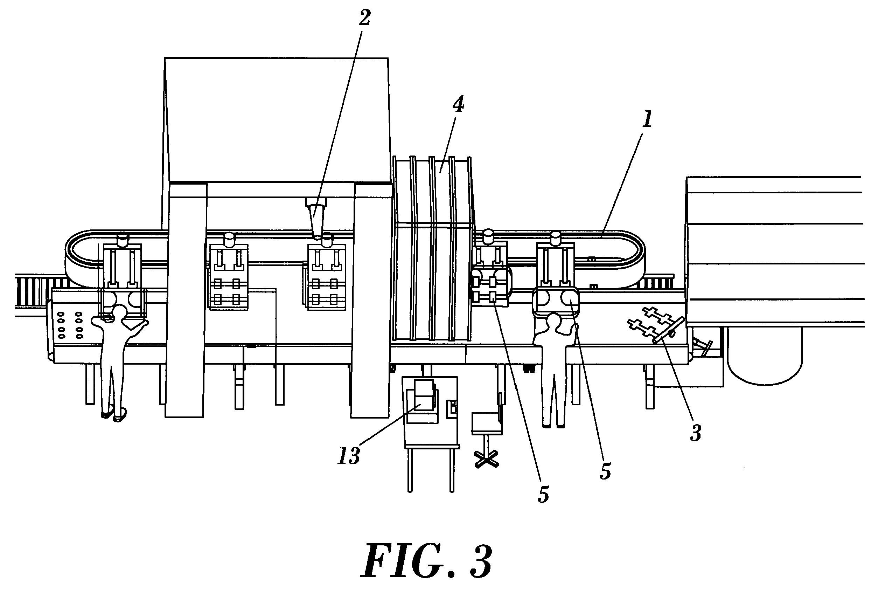

Figures 2 and 3 respectively depict two possible alternative solutions for the fixing implement (5) and conveyor system (1).

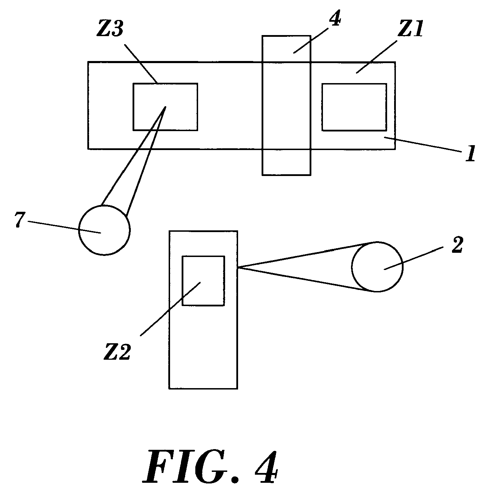

Figures 4, 5 and 6 illustrate a second embodiment of the method of the invention (as described in claim 3) in which there are observed a first working area (z1) where the cluster (3) is placed, a first computer vision system (4) for obtaining an image of the mentioned cluster (3) and processing it according to phases f) to h) of the method of the invention and a second working area (z2) in which a first industrial manipulator (2) can work, which industrial manipulator handles a separating system containing at least one separating tool (8) for separating the cast parts (14) according to the coordinates of the cutting points, orientation of the parts and entering angle transferred in phase i). In this embodiment, the cluster (3) is arranged in the first working area (z1) on a conveyor system (1) but it is not necessary to fix the cluster by means of the fixing implement. In this case, the conveyor system (1) moves the cluster through the first computer vision system (4) to a third working area (z3).

In this embodiment, there has also been provided a second industrial manipulator (7) which is configured to move the cluster (3) from the third working area (z3) to the second working area (z2) to separate the cast parts (14). The second manipulator (7) positions the cluster in the second working area (z2) with a determined orientation and position. In this case, the second working area (z2) is arranged outside the conveyor (1). The first computer vision system (4) is arranged between the first working area (z1) and the third working area (z3).

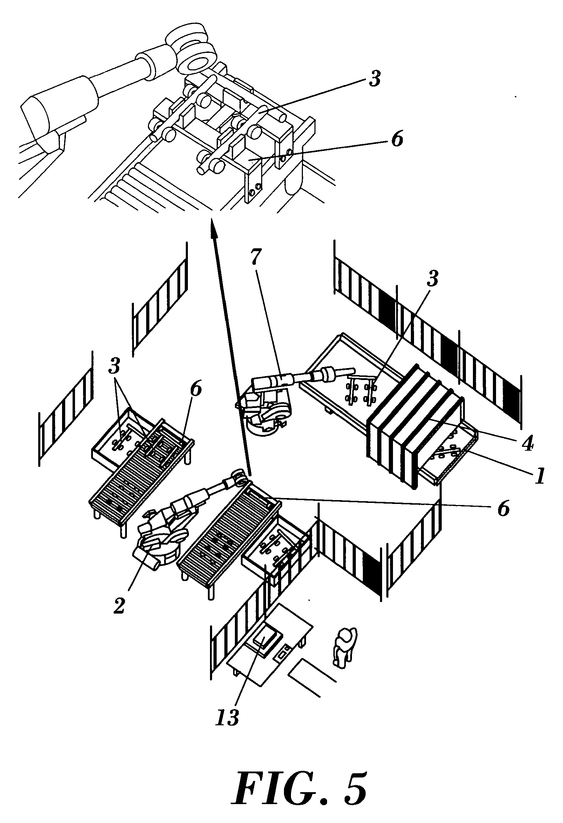

Figure 5 illustrates a positioning implement (6) which allows positioning the cluster in the second working area (z2) during the separation process.

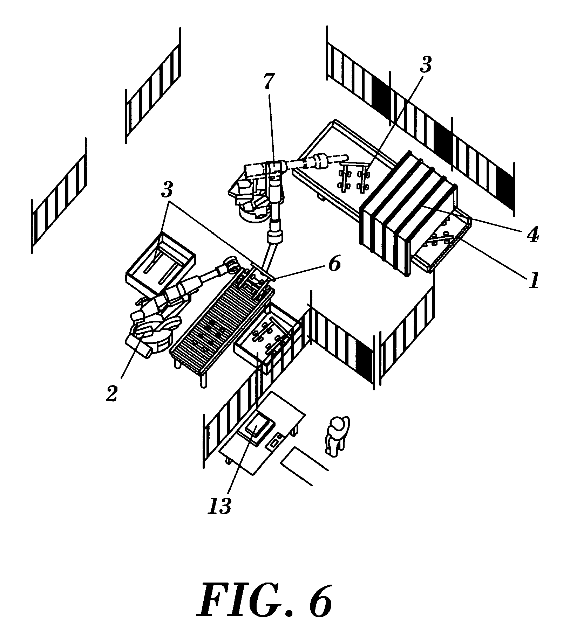

Figure 6 shows an embodiment in which the first industrial maniputator (2) acts as a securing element for securing the clusters (3) during the cutting process.

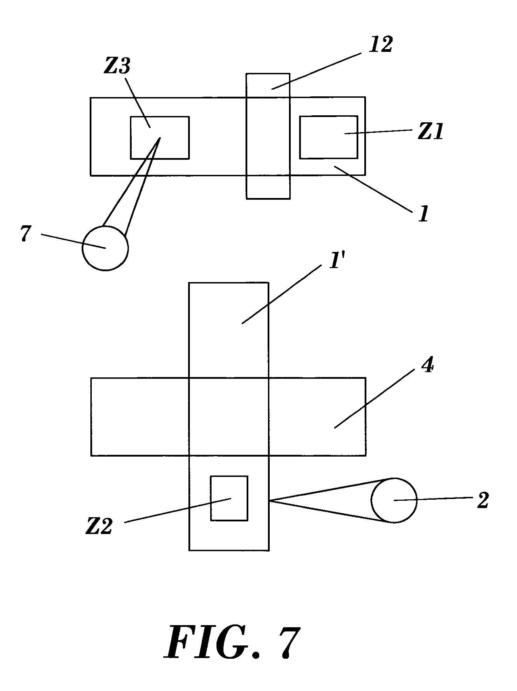

Figures 7, 8 and 9 illustrate a third embodiment of the method of the invention (as described in claim 4) in which, as in the second embodiment, there are defined three working areas, including a third working area (z3) and a second manipulator (7) and in which the second working area (z2) for separating by means of the first manipulator (2) is arranged outside the conveyor system (1).

In this case, there has been provided a second computer vision system (12) which is arranged between the first working area (z1) and the third working area (z3) and the first computer vision system (4) is arranged between the third working area (z3) and the second working area (z2) such that the cluster moved by the second manipulator (7) from the third working area (z3) passes through the first computer vision system (4) before the separation in the second working area (z2). This embodiment allows preventing errors in the separation process due to possible deviations during the manipulation of the cluster from the third working area (z3) to the second working area (z2), and it is not necessary to place the cluster (3) in the second working area (z2) with a determined orientation and position.

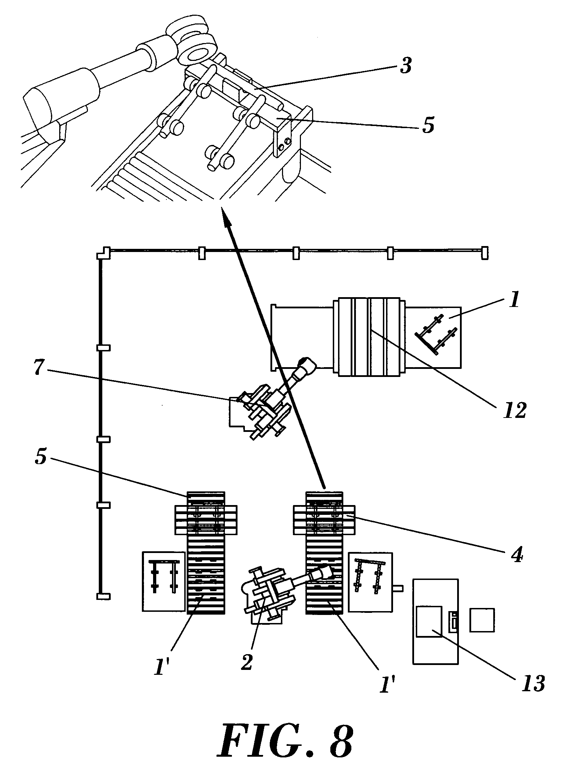

In Figure 8 illustrates a fixing implement (5) fixing the cluster in the second working area (z2) during the process of capturing an image of the cluster by means of the first computer vision system (4), the process of calculating the separation coordinates, orientation and entering angle and the separation process.

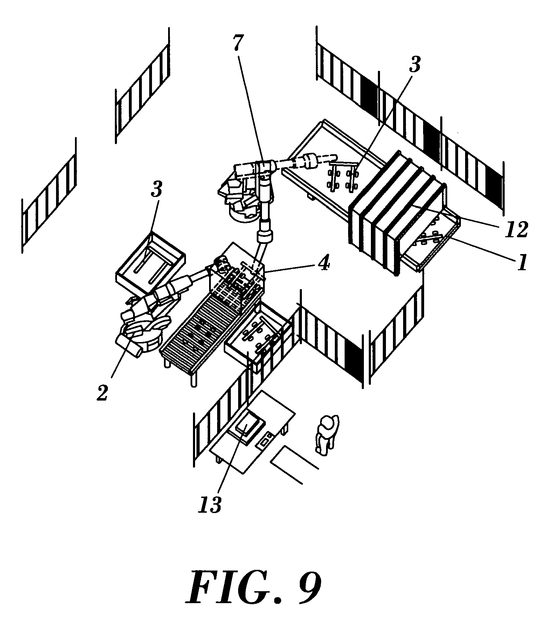

Figure 9 shows an embodiment in which the first industrial manipulator (2) acts as a securing element for securing the clusters (3) during the process of capturing an image of the cluster by means of the first computer vision system (4), the process of calculating the separation coordinates, orientation and entering angle and the separation process.

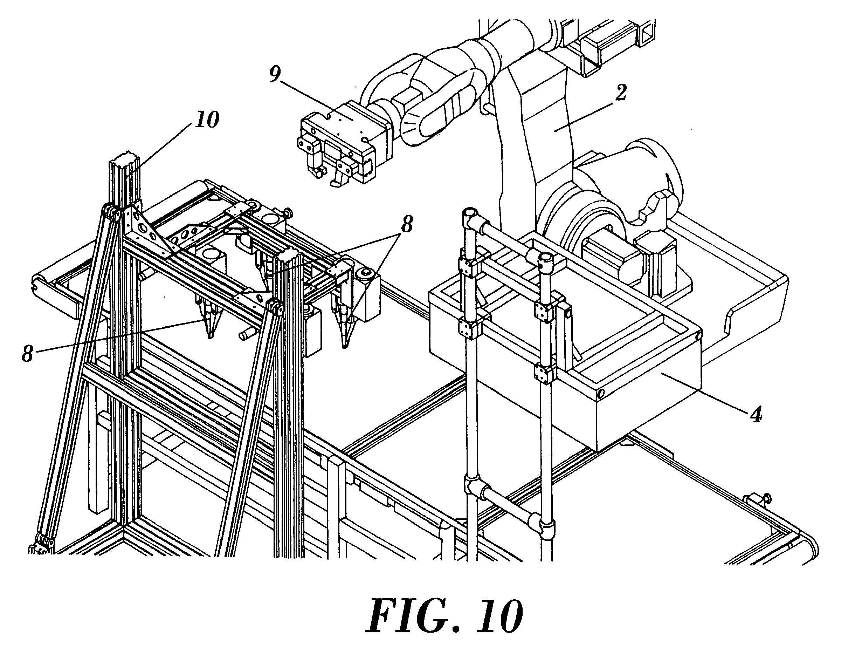

Figure 10 illustrates a fourth embodiment of the method (according to claim 5) in which the separating system formed by at least one separating tool (8) located in the second working area (z2) is supported by a solid structure or a gantry (10) and the first industrial manipulator (2) handles a gripping tool (9).

Like in the second embodiment, three working areas are defined. The cluster (3) is placed in a first working area (z1), and in a third working area (z3) the first industrial manipulator (2) grips the cluster (3) to move it to the second working area (z2) before the separation operation.

The first computer vision system (4) is arranged between the first working area (z1) and the third working area (z3).

The first industrial manipulator (2) positions the cluster (3) under the separating system to line up the separating system with the cutting points for cutting the cluster (3), with the suitable orientation and with the determined entering angle for each of the separations of the cluster.

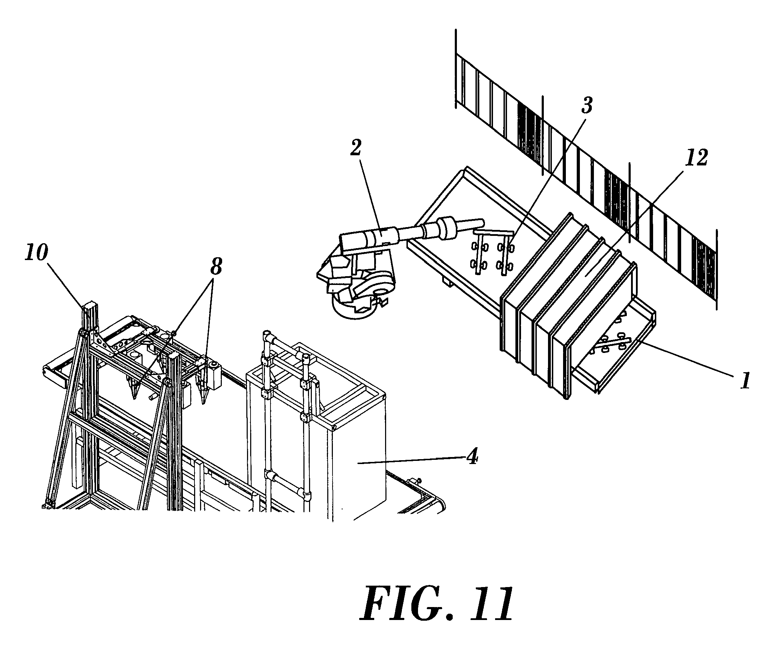

Figure 11 illustrates a fifth embodiment of the method (according to claim 6) in which, like in the fourth embodiment, the separating system (8) located in the second working area (z2) is supported by a structure, and three working areas are distinguished.

In this case, a second computer vision system (12) which is arranged between the first working area (z1) and the third working area (z3), has been provided, and the first computer vision system (4) is arranged between the third working area (z3) and the second working area (z2) such that the cluster (3) moved by the first manipulator (2) from the third working position (z3) passes through the first computer vision system (4) before the separation in the second working area (z2), secured by the first industrial manipulator (2).

This embodiment allows preventing errors in the separation process due to possible deviations during the manipulation of the cluster from the third working area (z3) to the second working area (z2).

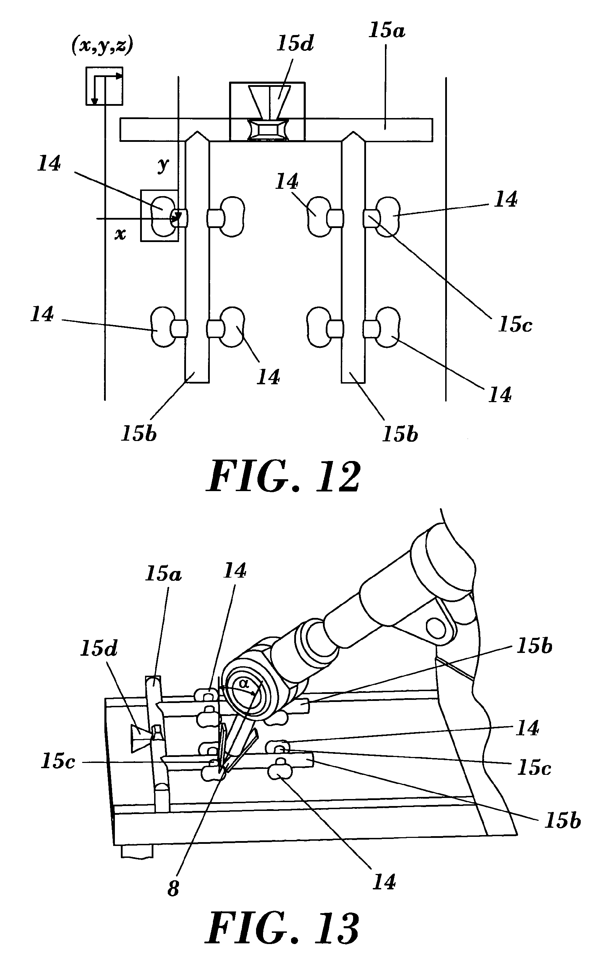

Figure 12 schematically shows a typical conventional cluster (3) with cast parts (14) attached to respective side lines (15c) of two secondary branches (15b) attached to a connection branch (15c) of a mold (15) comprising a pouring cup (15d). The pouring cup (15d) is a common element in clusters (3) of one casting and could be used as a reference for gripping the clusters (3) by means of the industrial manipulator which the griping tool (9) has, regardless of the type of part (14) which is manufactured in claims 2,3,4 and 5 in which it is necessary to manipulate the cluster before the separation in a second working area (z2).

Figure 12 shows the coordinates calculated by the first computer vision system (4) and Figure 13 shows the assignment of the entering angle based on stored data, in order to establish the points of interest. The system involves a new flexibility concept in the processes for separating cast parts from their cluster (3) since it adapts to any type of cluster (3) within specified dimension and weight limits.

To establish the cutting points, their location for positioning the cutting tool is identified by means of the first computer vision system (4), which locates in an image the pattern of the desired area and transmits the spatial coordinates-x-, -y-, - z-, -β- thereof to the first manipulator (2). These coordinates will be both position and orientation coordinates. They will be initially referenced to the axis of coordinates (X,Y,Z) of the first computer vision system (4), so it is necessary to make a change of base to reference them to the system of coordinates (X',Y',Z') of the industrial manipulator (2).

According to claims 2, 3 and 5, the advance of the cluster (3) along the conveyor system (1) must furthermore be added to this obtained value.

The entering angle -α- at the cutting points, i.e., the angle of inclination of the cutting tool, is a constant associated with each type of part and is obtained from a record stored in a database.

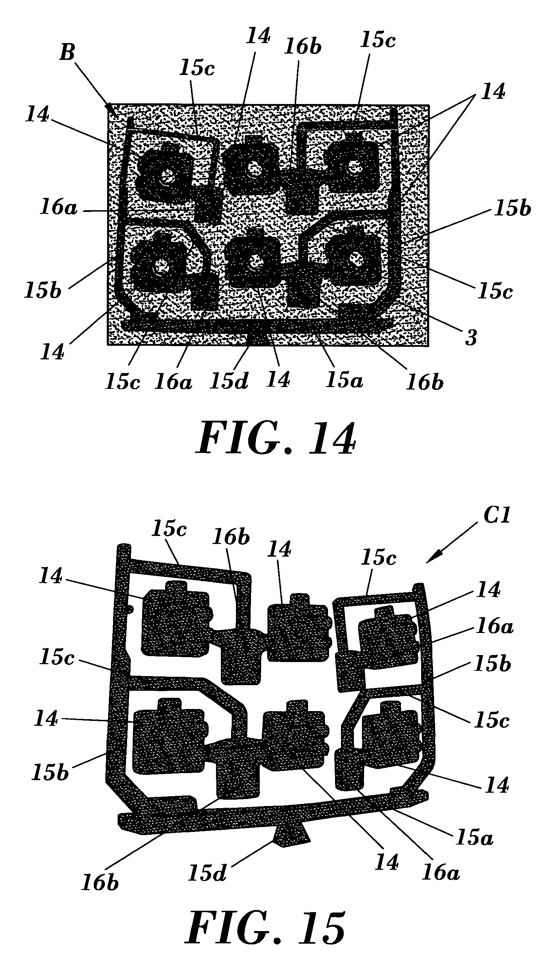

Figures 14 to 18 show steps prior to an algorithm for searching for the cutting point. Any image processing program such as Microsoft Paint^{®}, for example can be used in these prior steps.

The reference systems for the first computer vision system (4) and for the first industrial manipulator (2) are first defined.

The orientation of the axes of the reference system of the first computer vision system (4) will be defined by calibrating the camera, whereby possible distortions when taking images are also corrected and the pixel-millimeter equivalence is calculated for each area of the image.

The system of coordinates for the industrial manipulator is programmed by means of teaching. The selection of the system of coordinates can be any, but it is convenient for them to coincide in orientation with those of the first computer vision system (4).

It is necessary to accurately know the distance x,y,z separating both systems of coordinates and the difference in the orientation of their angles in order to be able to subsequently perform a change of base.

It is not necessary to program any movement instruction for the industrial manipulator by means of teaching or to define specific spatial points according to the different types of clusters as occurs in other automatic systems which need prior input about the movements of the industrial manipulator.

By means of the described invention, a program is loaded in the industrial manipulator which contains parameter-based movement instructions, such that through a graphic interface and the data obtained by the computer vision system information is sent to the industrial manipulator relating to positions, speeds, tool, number of points and type of movement. By means of a standard program, it is thus possible to autonomously command the industrial manipulator so that it adapts to the activity to perform and to the type of part with which it must work.

The camera and lens to be used will depend on different factors such as the working area, the accuracy required, the working distance, the type of connection desired... A valid camera for the application could be, for example, a 1280x960 digital camera with an 8 mm lens.

Figure 14 depicts an image taken of a first face of a real cluster. Figure 15 depicts an image taken of a second face (opposite the first face) of a real cluster.

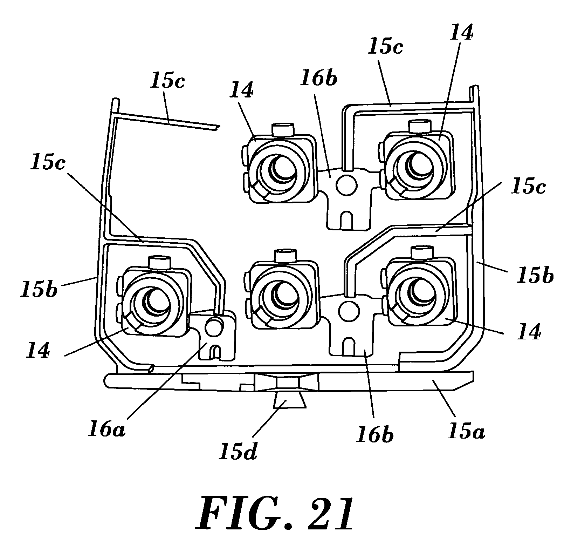

In the case of Figures 14 and 15, in addition to the elements forming the cluster which have already been schematically illustrated in Figures 12-13, two small risers (16a), each attached to one of the secondary branches (15b) and to a cast part (14), and two large risers (16b), each attached to a secondary branch (15b) and to two cast parts (14), can also be seen. The cast part or parts (14) can also be attached to a feeder line, such as a side branch (15c) or a secondary branch (15b). Figure 21 depicts a cluster (3) similar to that of Figure 14 but which is incomplete, i.e., one of the cast parts is missing. The real image can be processed by applying different filters to improve its quality and remove background marks which could negatively affect the recognition of patterns or remove the noise present in the image. A noise-free clearer processed image-C- of the cluster (3) is thus obtained (Figure 16).

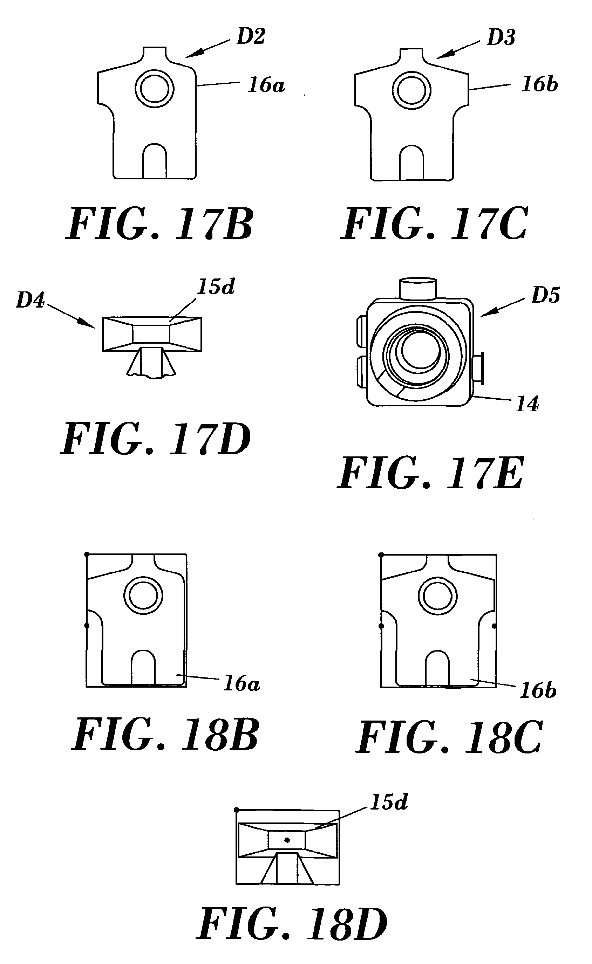

On the processed image-C, those portions of the cluster (3) which will later be used as patterns, such as for example and according to what is shown in Figures 17B-17E, of the small riser (16a), of the large riser (16b), of the pouring cup (15d) and of the cast part (14), are selected and are individually stored in respective subsequent digital files as pattern images, such as for example the pattern images - D2- (which will serve to find out the cutting point in the small riser), -D3- (which will serve to find out the cutting point in the large riser), -D4- which will serve to recognize the manipulation area in which the cluster will be gripped if necessary) and -D5- (to be able to resort to the database and know which angle of inclination - α- corresponds to it or to find out the cutting point if the part has been selected as a distinctive element).

A selection of important reference points in each of the pattern images, -D2-, -D3-, -D4-, is then performed.

A graphic interface could then be created to show the necessary information to the user, for example by using the working environment of NI LabWindows™/CVI of the company NATIONAL INSTRUMENTS CORPORATION® of Texas, USA. Thus, in the embodiment described herein, an interface has been created in which the captured image, the location of the cutting points thereon, and the calculated coordinates, orientation and entering angle of each cutting point are shown. It also offers the possibility of changing the cutting points, orientation and entering angle for the cases in which the user does not agree with those calculated by the program.

The entering angle database, in which the type of part and the entering angle corresponding to it are indicated, can be for example a ".txt" file created with the Windows® "wordpad".

In relation to the processing of the image, different vision libraries such as, for example, "IMAQ Vision for LabWindows^{®}/CVI", or other more powerful ones such MVT^{ec®} HALCON libraries could be used.

In this case, the "IMAQ Vision for LabWindows^{®} CVI" libraries have been used, in which it is possible to program directly in C. Initially, when the program is started, a series of functions are executed which allow the program to "learn" previously saved images in order to be able to subsequently recognize them within an image (the previously taken patterns). Furthermore, a series of parameters are configured to search for the pattern as the position in which it is expected to be found (360°), the minimum match which must exist to consider the search as valid, number of iterations which are to be performed etc.

When a part is detected, by means of a photoelectric sensor for example, an image of the cluster is captured and it is processed. To that end, the same filters mentioned above in the defining patterns are used to remove noise and obtain a clearer image. A search for patterns is subsequently performed. If the system finds any matching pattern, information about the position in which the pattern has been found, its rotation with respect to the original pattern, the scale with respect to the original pattern, the match degree.... is obtained. This is performed with all the aforementioned pattern images -D2-, -D3-, -D4-, D5-.

Then a series of trigonometric functions are applied to obtain the coordinates of the desired points with respect to the coordinate system origin of the computer vision system initially defined in millimeters.

To offer the possibility of changing the cutting points and orientation of each part, the desired points can be selected on the image, the coordinates that the mouse has on the screen of the interface and the orientation of the cutting line that it draws on the screen when clicking on it being taken. These data are given according to the size of the computer screen. To change the entering angle, the operator enters it manually through a keyboard.

The coordinates referring to the coordinate origin of the computer vision system and transformed to millimeters are then calculated.

It is then necessary to reference the spatial coordinates obtained to the reference system of the industrial manipulator, taking into account the advance of the part. To that end, the pulses of an encoder placed on the conveyor system are read by means of a specific card; the pulses are then transformed into a linear distance according to the parameters of the encoder; the amount obtained is added to the previous spatial coordinates, and finally, a change of base is performed to reference the coordinates with respect to the reference system of the first industrial manipulator (2) as in the previous cases.

To calculate the entering angle, a name is assigned to each type of part and the .txt file is subsequently run through to extract the entering angle corresponding to the located name.

This information is sent to the controller of the industrial manipulator. To that end, it is necessary to set up a communication between the computer equipment and the controller. For example, a communication under the TCP protocol by means of sockets could be used. It is then necessary to define a frame common to both applications in which the information to be sent is structured.

Finally, the industrial manipulator interprets the frame and accesses the indicated point with the rotation and the entering angle received. Furthermore, it corrects its position in a closed loop according to the degree of advance of the cluster.

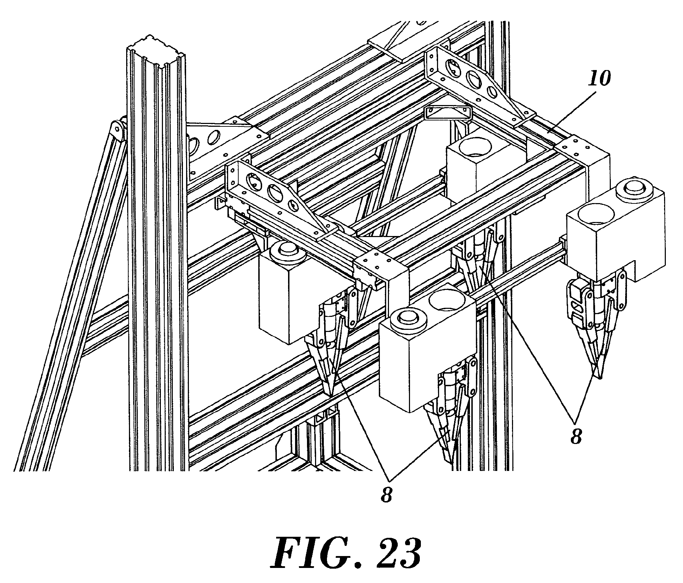

Figure 23 shows a separating system formed by several separating tools (8) for the purpose of performing several part separations simultaneously.

These tools can be static, for example, such that each separating system is specific for a specific reference.

These tools can also be dynamic separating tools, provided with motors and movement guides allowing them to move in different directions and having external communication whereby they receive the position to reach. The position and orientation thereof can thus be configured according to received data, and therefore several separations can be performed simultaneously.

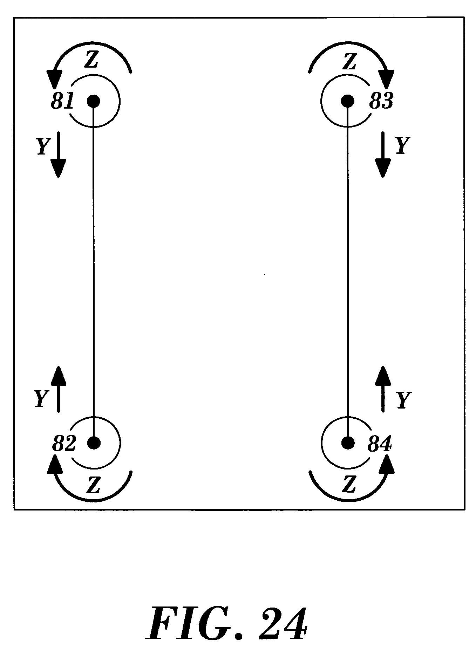

Figure 24 shows a possible embodiment of a separating system (8) formed by 4 separation tools with relative movement with respect to one another.

Throughout this description, direction X refers to the longitudinal direction of the cluster, direction Y refers to the direction perpendicular to the former in the plane, and direction Z refers to the direction corresponding to the height of the cluster.

On the X axis, the separating tools (81) and (82) are fixed and the separating tools (83) and (84) are rigidly attached, so X3=X4.

On the other hand, in the Y direction the separating tools (81) and (82) move symmetrically, such that Y1=-Y2. The same occurs with the separating tools (83) and (84) (Y3=-Y4). Nevertheless, Y1 can be different from Y3 if the cluster requires this.

The separating tools move by means of linear screw modules operated by a gear motor. The screw of the modules of the Y axis allows symmetrical movement of the two separating tools by means of a single motor.

On the other hand, for the movement on X two linear screw modules working as master-slave have been used, assuring at all times that the position of both is the same.

The positioning of each separating tool (81, 82, 83, 84) is controlled by means of a PCL.

## Claims

1. Method for separating cast parts (14) from clusters obtained by means of casting processes, the cluster (3) comprising a pouring cup (15d), cast parts (14) attached to the cluster (3) through attachment elements (15b, 15c) and feeding risers (16a, 16b), **characterized in that** it comprises:
a) defining a first spatial reference system (X, Y, Z) for a first computer vision system (4), defining a second spatial reference system (X',Y',Z') for a first industrial manipulator (2) in a second working area (z2) where the cast parts (14) are separated by means of a separating system, and interrelating both spatial reference systems according to the distances (x ,and ,z) separating them and the orientation of each axis;
b) developing a basic programming algorithm for the first industrial manipulator (2) based on movement instructions through parameters;
c) storing data corresponding to the cast parts (14), feeder lines (15a, 15b, 15c) and risers (16a, 16b) of the clusters, comprising data of the cutting points for cutting the cast parts (14) from the cluster (3);
d) placing the cluster (3) in a first working area (z1);
e) obtaining an image of the casting cluster (3) by means of the first computer vision system (4);
f) processing the image of the cluster obtained by the first computer vision system (4) in phase e) to obtain the orientation of the cast parts and the coordinates of the cutting points according to the data of the image of phase e) and the data stored in c);
g) converting the coordinates of the cutting points and orientation of the parts of the first spatial reference system (X, Y, Z) of the first computer vision system (4) to the second spatial reference system (X', Y', Z') of the first industrial manipulator (2);
h) determining the entering angle for separating each cast part (14) based on reference entering angle values contained in a database in computer equipment (13);
i) transmitting the coordinates and orientations calculated and the entering angle of phase h) to the first industrial manipulator (2) which allows confronting the separating system containing at least one separating tool (8) with the cutting points for cutting the cluster (3), with the suitable orientation and with the determined entering angle;
j) securing the cluster in the second working area (z2) and separating each cast part (14) from the cluster (3) by means of the separating system (8) in the second working area (z2).

2. Method for separating cast parts (14) according to claim 1, wherein the separating system located in the second working area (z2) is handled by the first industrial manipulator (2);
and in that phase d) comprises fixing the cluster (3) by means of a fixing implement (5) and moving the cluster from the first working area (z1) to the second working area (z2) by means of a conveyor system (1) and obtaining the image by means of the first vision system (4) in phase e) is performed once the cluster (3) has been placed in phase d);
and in that it comprises calculating the advance distance of the cluster (3) from phase e) to update the cutting coordinates of phase g).

3. Method for separating cast parts (14) from clusters according to claim 1, wherein the separating system located in the second working area (z2) is handled by the first industrial manipulator (2), the second working area (z2) being outside a conveyor system (1) used for moving the cluster (3) from the first working area (z1) to the second working area (z2);
and in that it comprises the following phases:
k) defining a third spatial reference system (X", Y", Z") for a second industrial manipulator (7) which handles a gripping tool (9) in a third working area (z3) and interrelating the third spatial reference system (X", Y", Z") of the second manipulator (7) with the first spatial reference system (X, Y, Z) of the first computer vision system (4) according to the distances (x1, y1, z1) separating them and the orientation of each axis;
l) storing data corresponding to a gripping element (15d), comprising data of the gripping point for gripping the casting cluster (3) and the face of the cluster;
and in that it comprises the following phases after phase e) and before phase i):
m) processing the image of the cluster obtained by the first computer vision system (4) in phase e) to obtain the orientation of the cluster, the face of the cluster and the gripping point according to data of the image of phase e) and the data stored in phase l);
n) converting the gripping coordinates and orientation of the cluster of phase m) of the first spatial reference system (X, Y, Z) of the first computer vision system (4) to the third spatial reference system (X", Y", Z") of the second industrial manipulator (7);
o) transmitting the gripping coordinates, face of the cluster and the orientation of the cluster of phase m) to the second industrial manipulator (7) to grip the cluster by the gripping element (15d);
p) gripping and turning the cluster over according to the face of the cluster (3) by means of the gripping tool (9) of the second industrial manipulator (7) based on coordinates of phase n), in the third working area (z3);
q) positioning the cluster (3) on the second working area (z2) to place the cluster in a determined position and orientation;
and in that it comprises the following phases after phase e) and before phase g):
r) updating the coordinates of the cutting points, orientation of the parts and entering angle according to the face of the cluster and referenced to gripping coordinates of the first computer vision system (4);
and in that it comprises moving the cluster (3) from the first working area (z1) to the third working area (z3) by means of a conveyor system and obtaining the image by means of the first computer vision system (4) in phase e) is performed once the cluster has been placed in phase d) and before the gripping phase p) in the third working area (z3), and in that it comprises updating the gripping coordinates of phase n) according to the advance of the cluster (3) on the conveyor system (1).

4. Method for separating cast parts (14) from clusters according to claim 1, wherein the separating system located in the second working area (z2) is handled by the first industrial manipulator (2), the second working area (z2) being outside the conveyor system (1);
and in that it comprises the following phases:
k1) defining a third spatial reference system (X", Y", Z") for a second industrial manipulator (7) which handles a gripping tool (9) in a third working area (z3), defining a fourth spatial reference system (X"', Y"', Z"') for a second computer vision system (12) which is arranged between the first working area (z1) and the third working area (z3), and interrelating both reference systems according to the distances (x1,y1,z1) separating them and the orientation of each axis;
l1) storing data corresponding to a gripping element (15d), comprising data of the gripping point for gripping the casting cluster (3) and face of the cluster;
and in that it comprises the following phases after phase d) and before phase e):
m1) obtaining an image of the casting cluster (3) by means of the second computer vision system (12);
n1) processing the image of the cluster obtained by the second computer vision system (12) in phase m1) to obtain the face of the cluster, the orientation of the cluster and the coordinates of the gripping point according to data of the image of phase m1) and the data stored in phase l1);
o1) converting the coordinates of the gripping point and orientation of the cluster of phase n1) of the fourth spatial reference system (X"', Y"', Z'") of the second computer vision system (12) to the third spatial reference system (X", Y", Z") of the second industrial manipulator (7);
p1) transmitting the coordinates calculated in o1), orientation of the cluster and the face of the cluster to the second industrial manipulator (7) to grip the cluster (3) at the gripping point;
q1) gripping and turning the cluster over according to the face of the cluster (3) by means of the gripping tool (9) of the second industrial manipulator (7) based on coordinates of phase o1), in the third working area (z3);
r1) positioning the cluster (3) on the second working area (z2) in an undetermined orientation;
and in that it comprises moving the cluster (3) from the first working area (z1) to the third working area (z3) by means of a conveyor system (1), in that obtaining the image by means of the second computer vision system (12) in phase m1) is performed once the cluster has been placed in phase d) and before the gripping phase q1) in the third working area (z3), in that obtaining the image by means of the first computer vision system (4) in phase e) is performed in the second working area (z2) after phase r1) and before the separation of phase j) and in that it comprises updating the gripping coordinates of phase o1) according to the advance of the cluster (3) on the conveyor system (1).

5. Method for separating cast parts (14) according to claim 1, wherein the separating system located in the second working area (z2) is supported by a structure (10) and the first industrial manipulator (2) handles a gripping tool (9);
and in that it further comprises the following phases:
k2) defining a fourth spatial reference system (X"', Y"', Z"') located at the origin of the separating system for the first industrial manipulator (2);
12) storing data corresponding to a gripping element (15d), comprising data of the gripping point for gripping the casting cluster (3), and face of the cluster;
and in that it comprises the following phases after phase e) and before phase g):
m2) processing the image of the cluster obtained by the first computer vision system (4) in phase e) to obtain the face of the cluster, orientation of the cluster and the gripping point according to data of the image of phase e) and the data stored in phase 12);
n2) converting the gripping coordinates and orientation of the cluster of phase m2) of the first spatial reference system (X, Y, Z) of the first computer vision system (4) to the second spatial reference system (X', Y', Z') of the first industrial manipulator (2);
o2) transmitting the gripping coordinates, face of the cluster and orientation of the cluster to the first industrial manipulator to grip the cluster by the gripping element (15d);
p2) gripping and turning the cluster (3) over according to the face of the cluster by means of the gripping tool (9) handled by the first industrial manipulator (2) based on coordinates of phase n2) in a third working area (z3);
and in that it comprises the following phase after phase g) and before phase i):
q2) converting the coordinates of the cutting points, orientation of the parts and entering angle of the second spatial reference system (X', Y', Z') of the first industrial manipulator (2) to the fourth spatial reference system (X"', Y"', Z"') of the first industrial manipulator (2) referenced to the separating system;
and in that it comprises the following phase after phase i) and before phase j):
r2) positioning the separating points for separating the cluster (3) under the separating system in the second working area (z2) according to separation coordinates, orientation of the parts and entering angle;
and in that it comprises moving the cluster (3) from the first working area (z1) to the third working area (z3) by means of a conveyor system and obtaining the image by means of the first computer vision system (4) in phase e) is performed once the cluster has been placed in phase d) and before the gripping phase p2) in the third working area (z3), and in that it comprises updating the gripping coordinates of phase n2) according to the advance of the cluster (3) on the conveyor system (1).

6. Method for separating cast parts (14) according to claim 1, wherein the separating system located in the second working area (z2) is supported by a structure (10) and the first industrial manipulator (2) handles a gripping tool;
and in that it further comprises the following phases:
k3) defining a third spatial reference system (X", Y", Z") for a second computer vision system (12) which is arranged between the first working area (z1) and a third working area (z3) and interrelating the third spatial reference system (X", Y", Z") of the second computer vision system (12) with the second spatial reference system (X', Y', Z') of the first industrial manipulator (2) according to the distances (x1,y1,z1) separating them and the orientation of each axis, and defining a fourth spatial reference system (X"', Y"', Z"') located at the origin of the separating system for the first industrial manipulator (2);
l3) storing data corresponding to a gripping element (15d), comprising data of the gripping point for gripping the casting cluster (3) and face of the cluster;
and in that it comprises the following phases after phase d) and before phase e):
m3) obtaining an image of the casting cluster (3) by means of the second computer vision system (12);
n3) processing the image of the cluster obtained by the second computer vision system (12) in phase m3) to obtain the face and orientation of the cluster and the coordinates of the gripping point according to data of the image of phase m3) and data stored in phase l3);
o3) converting the coordinates of the gripping point and orientation of the cluster of the third spatial reference system (X", Y", Z") of the second computer vision system (12) to the second spatial reference system (X', Y', Z') of the first industrial manipulator (2);
p3) transmitting the gripping coordinates, face of the cluster and orientation of the cluster to the first industrial manipulator (2) to grip the cluster by the gripping element (15d);
q3) gripping and turning the cluster over according to the face of the cluster (3) by means of the gripping tool (9) handled by the first industrial manipulator (2) based on coordinates of phase o3) in a third working area (z3);
and in that it comprises after phase g) and before phase i):
r3) converting the coordinates of the cutting points, orientation of the parts and entering angle of the second spatial reference system (X', Y', Z') of the first industrial manipulator (2) to the fourth spatial reference system (X"', Y"', Z"') of the first industrial manipulator (2) referenced to the separating system;
and in that it comprises the following phase after phase i) and before phase j):
s3) positioning the separating points for separating the cluster (3) under the separating system in the second working area (z2) according to separation coordinates, orientation of the parts and entering angle of phase r3);
and in that it comprises moving the cluster (3) from the first working area (z1) to the third working area (z3) by means of a conveyor system (1), in that obtaining the image by means of the second computer vision system (12) in phase m3) is performed once the cluster has been placed in phase d) and before the gripping phase q3) in the third working area (z3), in that obtaining the image by means of the first computer vision system (4) in phase e) is performed in the second working area (z2) after phase q3) and before the separation of phase j), and in that it comprises updating the gripping coordinates of phase o3) according to the advance of the cluster (3) on the conveyor system (1).

7. Method for separating cast parts (14) from clusters according to any of the preceding claims, wherein it comprises, before the data transmitting phase i), the modification by an operator of the orientation and cutting coordinates of each part and the entering angle of the cutting tool.

8. Method for separating cast parts (14) from clusters according to any of the preceding claims, wherein the separating system contains more than one separating tool (8) which allows separating several parts in a single operation.

9. Method according to claim 8, wherein the separating system comprises dynamic separating tools comprising additional elements allowing their movement in different degrees of freedom.

## Patentansprüche

1. Verfahren zum Abtrennen von Gussteilen (14) von mittels eines Gießverfahrens erhaltenen Gusstrauben, wobei die Gusstraube (3) einen Gusstrichter (15d), Gussteile (14), welche mit der Gusstraube (3) durch Verbindungselemente (15b, 15c) verbunden sind, und Steigrohre (16a, 16b) umfasst, **dadurch gekennzeichnet, dass** es umfasst:
a) Definieren eines ersten räumlichen Bezugssystems (X, Y, Z) für ein erstes Computerbildverarbeitungssystem (4) und ein zweites räumliches Bezugssystem (X', Y', Z') für einen ersten industriellen Manipulator (2) in einem zweiten Arbeitsbereich (z2), in dem die Gussteile (14) mittels eines Trennsystems getrennt werden, und Inbezugsetzen beider räumlichen Bezugssysteme abhängig von den sie trennenden Entfernungen (x, und, z) und der Ausrichtung jeder Achse;
b) Entwickeln eines grundlegenden Programmieralgorithmus für den ersten industriellen Manipulator (2) basierend auf Bewegungsbefehlen durch Parameter;
c) Speichern von den Gussteilen (14), den Verbindungselementen (15a, 15b, 15c) und den Steigrohren (16a, 16b) der Traube entsprechende Daten, welche Daten der Schneidpunkte zum Abschneiden der Gussteile (14) von der Gusstraube (3) umfassen;
d) Platzieren der Gusstraube (3) in einem ersten Arbeitsbereich (z1);
e) Erfassen eines Bildes der Gusstraube (3) mit Hilfe des ersten Computerbildverarbeitungssystems (4);
f) Verarbeiten des Bildes der Gusstraube, welches durch das erste Computerbildverarbeitungssystem (4) in Schritt e) aufgezeichnet wurde, derart, dass die Ausrichtung der Gussteile und die Koordinaten der Schneidpunkte entsprechend den Daten des Bildes aus Schritt e) und den in c) gespeicherten Daten erhalten werden;
g) Konvertieren der Koordinaten der Schneidpunkte und der Orientierung der Teile aus dem ersten räumlichen Bezugssystem (X, Y, Z) des ersten Computerbildverarbeitungssystems (4) in das räumliche Bezugssystem (X', Y', Z') des ersten industriellen Manipulators (2);
h) Bestimmen des Zugangswinkels zum Abtrennen eines jeden Gussteils (14) basierend auf Werten von Referenzzugangswinkeln, die in einer Datenbank eines Computersystems (13) enthalten sind;
i) Übertragen der berechneten Koordinaten und Orientierungen und der Zugangswinkel aus Schritt h) zu dem ersten industriellen Manipulator (2), wodurch es möglich ist, das Trennsystem, das mindestens ein Trennwerkzeug (8) umfasst, mit den Schneidpunkten zum Zerschneiden der Traube (3) mit der geeigneten Ausrichtung und mit dem berechneten Zugangswinkel zu versorgen;
j) Sichern der Traube innerhalb des zweiten Arbeitsbereichs (z2) und Abtrennen jedes Gussteils (14) von der Gusstraube (3) mittels der Trennvorrichtung (8) in dem zweiten Arbeitsbereich (z2).

2. Verfahren zum Abtrennen von Gussteilen (14) nach Anspruch 1, wobei das in dem zweiten Arbeitsbereich (z2) befindliche Trennsystem von dem ersten industriellen Manipulator (2) gehandhabt wird;
und wobei Schritt d) das Fixieren der Gusstraube (3) durch eine Fixiereinrichtung (5) und das Bewegen der Gusstraube aus dem ersten Arbeitsbereich (z1) in den zweiten Arbeitsbereich (z2) mittels eines Fördersystems (1) umfasst und wobei das Erfassen des Bildes mit Hilfe des ersten Computerbildverarbeitungssystems (4) in Schritt e) erfolgt, sobald die Gusstraube (3) in dem Schritt d) platziert wurde;
und wobei es die Berechnung der Vorschubdistanz der Gusstraube (3) anhand des Schrittes e) umfasst, um die Schneidkoordinaten des Schrittes g) zu aktualisieren.

3. Verfahren zum Abtrennen von Gussteilen (14) von Gusstrauben nach Anspruch 1, wobei das in dem zweiten Arbeitsbereich (z2) befindliche Trennsystem von dem ersten industriellen Manipulator (2) gehandhabt wird, wobei sich der zweite Arbeitsbereich (z2) außerhalb eines Fördersystems (1) befindet, welches dazu genutzt wird die Gusstraube von dem ersten Arbeitsbereich (z1) zu dem zweiten Arbeitsbereich (z2) zu bewegen;
und wobei es die folgenden Schritte umfasst:
k) Definieren eines dritten räumlichen Bezugssystems (X", Y", Z") für einen zweiten industriellen Manipulator (7), der in einem dritten Arbeitsbereich (z3) ein Greifwerkzeug (9) handhabt, und Inbezugsetzen des dritten räumlichen Bezugssystems (X", Y", Z") des zweiten industriellen Manipulators (7) mit dem räumlichen Bezugssystem (X, Y, Z) des ersten Computerbildverarbeitungssystems (4) abhängig von den sie trennenden Entfernungen (x1, y1, z1) und der Ausrichtung jeder Achse;
l) Speichern von Daten, die einem Greifelement (15d) zugeordnet sind, welche Daten des Greifpunkts zum Greifen der Gusstraube (3) und der Oberfläche der Traube umfassen;
und wobei es nach Schritt e) und vor Schritt i) die folgenden Schritte umfasst:
m) Verarbeiten des Bildes der Gusstraube, welches von dem ersten Computerbildverarbeitungssystem (4) in Schritt e) erhalten wurde, um die Ausrichtung der Traube, die Oberfläche der Traube und den Greifpunkt entsprechend den Daten des Bildes aus Schritt e) und den in Schritt l) gespeicherten Daten zu erhalten;
n) Konvertieren der Greifkoordinaten und der Ausrichtung der Gusstraube aus Schritt m) aus dem ersten räumlichen Bezugssystem (X, Y, Z) des ersten Computerbildverarbeitungssystems (4) in das dritte räumliche Bezugssystem (X", Y", Z") des zweiten industriellen Manipulators (7);
o) Übertragen der Greifkoordinaten, der Oberfläche der Traube und der Ausrichtung der Traube aus Schritt m) zu dem zweiten industriellen Manipulator (7), um die Traube mittels des Greifelements (15d) zu greifen;
p) Greifen und Umdrehen der Gusstraube in dem dritten Arbeitsbereich (z3) in Abhängigkeit von der Oberfläche der Traube (3) mittels des Greifwerkzeuges (9) des zweiten industriellen Manipulators (7) basierend auf den Koordinaten aus Schritt n);
q) Positionieren der Gusstraube (3) auf dem zweiten Arbeitsbereich (z2), um die Traube in eine bestimmte Position und Ausrichtung zu bringen;
und wobei es nach Schritt e) und vor Schritt g) den folgenden Schritt umfasst:
r) Aktualisieren der Koordinaten der Schneidpunkte, der Ausrichtung der Teile und des Zugangswinkels gemäß der Oberfläche der Traube und bezogen auf die Greifkoordinaten des ersten Computerbildverarbeitungssystems (4),
und wobei es umfasst, dass das Bewegen der Traube (3) mittels einer Fördereinrichtung von dem ersten Arbeitsbereich (z1) zu dem dritten Arbeitsbereich (z3) erfolgt und dass das Bild durch das ersten Computerbildverarbeitungssystem (4) in Schritt e) erfasst wird, sobald die Traube in Schritt d) platziert wurde und bevor der Greifschritt p) in dem dritten Arbeitsbereich (z3) erfolgt und dass die Aktualisierung der Greifkoordinaten in Schritt n) entsprechend dem Vorschub der Traube (3) auf dem Fördersystem (1) erfolgt.

4. Verfahren zum Abtrennen von Gussteilen (14) von Gusstrauben nach Anspruch 1, wobei das in dem zweiten Arbeitsbereich (z2) befindliche Trennsystem von dem ersten industriellen Manipulator (2) bedient wird, wobei sich der zweite Arbeitsbereich (z2) außerhalb des Fördersystems (1) befindet;
und wobei es die folgenden Schritte umfasst:
k1) Definieren eines dritten räumlichen Bezugssystems (X", Y", Z") für einen zweiten industriellen Manipulator (7), der in einem dritten Arbeitsbereich (Z3) ein Greifwerkzeug (9) handhabt, und Definieren eines vierten räumlichen Bezugssystems (X"', Y"', Z"') für ein zweites Computerbildverarbeitungssystem (12), das sich zwischen dem ersten Arbeitsbereich (z1) und dem dritten Arbeitsbereich (z3) befindet, und Inbezugsetzen der beiden Bezugssysteme abhängig von den sie trennenden Entfernungen (x1, y1, z1) und der Ausrichtung jeder Achse;
l1) Speichern von Daten, die einem Greifelement (15d) zugeordnet sind welche Daten des Greifpunkts zum Greifen der Gusstraube (3) und der Oberfläche der Traube umfassen;
und wobei es nach Schritt d) und vor Schritt e) die folgenden Schritte umfasst:
m1) Erfassen eines Bildes der Gusstraube (3) durch das zweite Computerbildverarbeitungssystem (12);
n1) Verarbeiten des Bildes der Gusstraube, welches von dem zweiten Computerbildverarbeitungssystem (12) in Schritt m1) erhalten wurde, um die Oberfläche der Traube, die Ausrichtung der Traube und die Koordinaten des Greifpunkts entsprechend den Daten des Bildes aus Schritt m1) und den in Schritt l1) gespeicherten Daten zu erhalten;
o1) Konvertieren der Koordinaten des Greifpunkts und der Ausrichtung der Traube aus Schritt n1) aus dem vierten räumlichen Bezugssystem (X"', Y"', Z"') des zweiten Computerbildverarbeitungssystems (12) in das dritte räumliche Bezugssystem (X", Y", Z") des zweiten industriellen Manipulators (7);
p1) Übertragen der in Schritt o1) berechneten Koordinaten, der Ausrichtung der Traube und der Oberfläche der Traube zu dem zweiten industriellen Manipulator (7), um die Traube (3) an dem Greifpunkt zu greifen;
q1) Greifen und Umdrehen der Traube in Abhängigkeit von der Oberfläche der Traube (3) mittels des Greifwerkzeuges (9) des zweiten industriellen Manipulators (7) in dem dritten Arbeitsbereich (z3) basierend auf den Koordinaten des Schrittes o1);
r1) Positionieren der Traube (3) in dem zweiten Arbeitsbereich (z2) in einer unbestimmten Ausrichtung,
wobei es umfasst, dass das Bewegen der Gusstraube (3) mittels einer Förderanlage (1) von dem ersten Arbeitsbereich (z1) in den dritten Arbeitsbereich (z3) erfolgt und dass das Erfassen des Bildes durch das zweite Computerbildverarbeitungssystem (12) in Schritt m1) erfolgt, sobald die Traube in Schritt d) platziert wurde und vor dem Greifschritt q1) in dem dritten Arbeitsbereich (z3) und dass das Erfassen des Bildes mit Hilfe des ersten Computerbildverarbeitungssystems (4) in Schritt e) in dem zweiten Arbeitsbereich (z2) nach Schritt r1) und vor dem Trennen in Schritt j) erfolgt und dass die Aktualisierung der Koordinaten aus Schritt o1) abhängig von dem Vorschub der Traube (3) auf dem Transportsystem (1) erfolgt.

5. Verfahren zum Abtrennen von Gussteilen (14) nach Anspruch 1, wobei das in dem zweiten Arbeitsbereich (z2) befindliche Trennsystem durch eine Struktur (10) gestützt wird, und der erste industrielle Manipulator (2) ein Greifwerkzeug (9) handhabt;
und wobei es weiterhin folgende Schritte umfasst:
k2) Definieren eines vierten räumlichen Bezugssystems (X"', Y"', Z"'), welches sich am Ursprung des Trennsystems für den ersten industriellen Manipulator (2) befindet;
l2) Speichern von Daten, die einem Greifelement (15d) zugeordnet sind, welche Daten des Greifpunkts zum Greifen der Gusstraube (3) und der Oberfläche der Traube umfassen;
und wobei es nach Schritt e) und vor Schritt g) die folgenden Schritte umfasst:
m2) Verarbeiten des Bildes der Traube, welches durch das erste Computerbildverarbeitungssystem (4) in Schritt e) erhaltenen wurde, um die Oberfläche der Traube, die Ausrichtung der Traube und den Greifpunkt entsprechend der Daten des Bildes aus Schritt e) und der in Schritt l2) gespeicherten Daten zu erhalten;
n2) Konvertieren der Greifkoordinaten und der Ausrichtung der Traube aus Schritt m2) aus dem ersten räumlichen Bezugssystem (X, Y, Z) des ersten Bildverarbeitungsprogramms (4) in das zweite räumliche Bezugssystem (X', Y', Z') des ersten industriellen Manipulators (2);
o2) Übertragen der Greifkoordinaten, der Oberfläche der Traube und der Ausrichtung der Traube zu dem ersten industriellen Manipulator, um die Traube mittels des Greifelements (15d) zu greifen;
p2) Greifen und Umdrehen der Traube (3) in Abhängigkeit der Oberfläche der Traube mittels des Greifwerkzeuges (9) des ersten industriellen Manipulators (2) in dem dritten Arbeitsbereich (z3)basierend auf den Koordinaten aus Schritt n2);
und wobei es nach Schritt g) und vor Schritt l) den folgenden Schritt umfasst:
q2) Konvertieren der Koordinaten der Schneidpunkte, der Ausrichtung der Teile und des Zugangswinkels aus dem zweiten räumlichen Bezugssystem (X', Y', Z') des ersten industriellen Manipulators (2) in das auf das Trennsystem bezogene vierte räumliche Bezugssystem (X"', Y"', Z"') des ersten industriellen Manipulators (2);
und wobei es nach Schritt i) und vor Schritt j) den folgenden Schritt umfasst:
r2) Positionieren der Trennstellen zum Zertrennen der Traube (3) unter dem Trennsystem des zweiten Arbeitsbereichs (z2) abhängig von den Trennungskoordinaten, der Ausrichtung der Teile und dem Zugangswinkel,
und wobei es umfasst, dass das Bewegen der Gusstraube (3) von dem ersten Arbeitsbereich (z1) zu dem dritten Arbeitsbereich (z3) mittels einer Fördereinrichtung erfolgt und dass das Erfassen des Bildes mittels des ersten Computerbildverarbeitungssystems (4) aus Schritt e) erfolgt, sobald die Traube in Schritt d) platziert wurde und vor dem Greifschritt p2) in dem dritten Arbeitsbereich (z3), und dass die Greifkoordinaten aus Schritt n2) entsprechend dem Vorschub der Traube (3) auf dem Fördersystem (1) aktualisiert werden.

6. Verfahren zum Abtrennen von Gussteilen (14) nach Anspruch 1, wobei das in dem zweiten Arbeitsbereich (z2) befindliche Trennsystem durch eine Struktur (10) gestützt wird und der erste industrielle Manipulator (2) ein Greifwerkzeug handhabt;
und wobei es weiterhin die nachfolgenden Schritte umfasst:
k3) Definieren eines dritten räumlichen Bezugssystems (X", Y", Z") für ein zweites Computerbildverarbeitungssystem (12), das zwischen dem ersten Arbeitsbereich (z1) und dem dritten Arbeitsbereich (z3) angeordnet ist und Inbezugsetzen des dritten räumlichen Bezugssystems (X", Y", Z") des zweiten Bilderkennungssystems (12) mit dem zweiten räumlichen Bezugssystem (X', Y', Z') des ersten industriellen Manipulators (2) abhängig von den sie trennenden Entfernungen (x1, y1, z1) und der Ausrichtung jeder Achse und Definieren eines vierten räumlichen Bezugssystems (X"', Y"', Z"'), welches sich am Ursprung des Trennsystems des ersten industriellen Manipulators (2) befindet;
l3) Speichern von Daten, die einem Greifelement (15d) zugeordnet sind, welche Daten des Greifpunkts zum Greifen der Gusstraube (3) und der Oberfläche der Traube umfassen;
und wobei es nach Schritt d) und vor Schritt e) die folgenden Schritte umfasst:
m3) Erfassen eines Bildes der Gusstraube (3) mittels des zweiten Computerbildverarbeitungssystems (12);
n3 Verarbeiten des Bildes der Gusstraube, welches durch das zweite Computerbildverarbeitungssystem (12) in Schritt m3) erhaltenen wurde, um die Oberfläche und die Ausrichtung der Traube und die Koordinaten des Greifpunkts entsprechend den Daten des Bildes aus Schritt m3) und den in Schritt l3) gespeicherten Daten zu erhalten;
o3) Konvertieren der Koordinaten des Greifpunkts und der Ausrichtung der Traube aus dem dritten räumlichen Bezugssystem (X", Y", Z") des zweiten Bilderkennungssystems (12) in das zweite räumliche Bezugssystem (X', Y', Z') des ersten industriellen Manipulators (2);
p3) Übermitteln der Greifkoordinaten, der Oberfläche der Traube und der Ausrichtung der Traube zu dem ersten industriellen Manipulator (2), um die Traube mittels des Greifelements zu greifen (15d);
q3) Greifen und Umdrehen der Traube entsprechend der Oberfläche der Traube (3) mittels des Greifwerkzeuges (9), das von dem ersten industriellen Manipulators (2) gehandhabt wird, basierend auf den Koordinaten aus Schritt o3) in einem dritten Arbeitsbereich (z3);
und wobei es nach Schritt g) und vor Schritt i) umfasst:
r3) Konvertieren der Koordinaten der Schneidpunkte, der Ausrichtung der Gussteile und des Zugangswinkels von dem zweiten räumlichen Bezugssystem (X', Y', Z') des ersten industriellen Manipulators (2) in das auf das Trennsystem bezogene vierte räumliche Bezugssystem (X"', Y"', Z"') des ersten industriellen Manipulators (2);
und wobei es nach Schritt i) und vor Schritt j) den folgenden Schritt umfasst:
s3) Positionieren der Trennstellen zum Zertrennen der Traube (3) unter dem Trennsystem in dem zweiten Arbeitsbereich (z2) abhängig von den Trennungskoordinaten, der Ausrichtung der Teile und dem Zugangswinkel aus Schritt r3) positioniert werden
und wobei es umfasst, dass das Bewegen der Gusstraube (3) mittels einer Förderanlage (1) von dem ersten Arbeitsbereich (z1) zu dem dritten Arbeitsbereich (z3) erfolgt und dass das das Erfassen des Bildes mittels des zweiten Computerbildverarbeitungssystems (12) aus Schritt m3) erfolgt, sobald die Traube in Schritt d) platziert wurde und vor dem Greifschritt q3) in dem dritten Arbeitsbereich (z3) und dass das Bild mit Hilfe des ersten Computerbildverarbeitungssystems (4) aus Schritt e) in dem zweiten Arbeitsbereich (z3) erfasst wird, nachdem Schritt q3) durchgeführt wurde und bevor das Trennen aus Schritt j) stattgefunden hat, und dass die Aktualisierung der Greifkoordinaten aus Schritt o3) gemäß dem Vorschub der Traube (3) auf dem Fördersystem (1) erfolgt.

7. Verfahren zum Abtrennen von Gussteilen (14) von Trauben nach einem der vorhergehenden Ansprüche, wobei es umfasst, dass vor dem Datenübertragungsschritt i) die Änderung der Ausrichtung und der Schneidkoordinaten jedes Teils und die Änderung des Eintrittswinkels des Schneidwerkzeugs durch einen Nutzer vorgenommen wird.

8. Verfahren zum Abtrennen von Gussteilen (14) von Trauben nach einem der vorhergehenden Ansprüche, wobei das Trennsystem mehr als ein Trennwerkzeug (8) umfasst, welches es ermöglicht, dass mehrere Teile in einem einzigen Vorgang abgetrennt werden.

9. Verfahren nach Anspruch 8, wobei das Trennsystem dynamische Trennwerkzeuge mit zusätzlichen Elementen umfasst, welche deren Bewegung in verschiedenen Freiheitsgraden ermöglichen.

## Revendications

1. Procédé pour séparer des pièces de fonderie (14) des grappes obtenues au moyen de procédés de fonderie, la grappe (3) comprenant une bouche de coulée (15d), des pièces de fonderie (14) fixées à la grappe (3) par le biais d'éléments de fixation (15b, 15c) et des masselottes d'alimentation (16a, 16b), **caractérisé en ce qu'**il comprend :
a) définir un premier système de références spatiales (X, Y, Z) pour un premier système de vision informatique (4), définir un deuxième système de références spatiales (X', Y', Z') pour un premier manipulateur industriel (2) dans une deuxième zone de travail (z2) où les pièces de fonderie (14) sont séparées au moyen d'un système de séparation, et mettre en corrélation les deux systèmes de références spatiales selon les distances (x et z) les séparant et l'orientation de chaque axe ;
b) développer un algorithme de programmation de base pour le premier manipulateur industriel (2) en fonction des instructions de déplacement par le biais de paramètres ;
c) stocker des données correspondant aux pièces de fonderie (14), aux conduites du dispositif d'alimentation (15a, 15b, 15c) et aux masselottes (16a, 16b) des grappes, y compris les données des points de coupe pour couper les pièces de fonderie (14) de la grappe (3) ;
d) placer la grappe (3) dans une première zone de travail (z1) ;
e) obtenir une image de la grappe de moulage (3) au moyen du premier système de vision informatique (4) ;
f) traiter l'image de la grappe obtenue par le premier système de vision informatique (4) à l'étape e) pour obtenir l'orientation des pièces de fonderie et les coordonnées des points de coupe selon les données de l'image de l'étape e) et les données stockées à l'étape c) ;
g) convertir les coordonnées des points de coupe et l'orientation des pièces du premier système de références spatiales (X, Y, Z) du premier système de vision informatique (4) en deuxième système de références spatiales (X', Y', Z') du premier manipulateur industriel (2) ;
h) déterminer l'angle entrant pour séparer chaque pièce de fonderie (14) basé sur des valeurs d'angle entrant de référence contenues dans une base de données dans l'équipement informatique (13) ;
i) transmettre les coordonnées et les orientations calculées et l'angle entrant de l'étape h) au premier manipulateur industriel (2) qui permet de faire face au système de séparation contenant au moins un outil de séparation (8) avec les points de coupe pour couper la grappe (3), avec l'orientation appropriée et avec l'angle entrant déterminé ;
j) fixer la grappe dans la deuxième zone de travail (z2) et séparer chaque pièce de fonderie (14) de la grappe (3) au moyen du système de séparation (8) dans la deuxième zone de travail (z2).

2. Procédé pour séparer des pièces de fonderie (14) selon la revendication 1, **caractérisé en ce que** le système de séparation positionné dans la deuxième zone de travail (z2) est manipulé par le premier manipulateur industriel (2) ;
et **en ce que** l'étape d) comprend fixer la grappe (3) au moyen d'un outil de fixation (5) et déplacer la grappe de la première zone de travail (z1) à la deuxième zone de travail (z2) au moyen d'un système de transporteur (1) et obtenir l'image au moyen du premier système de vision (4) à l'étape e) est réalisée une fois que la grappe (3) a été placée à l'étape d) ;
et **en ce qu'**il comprend calculer la distance d'avancement de la grappe (3) à partir de l'étape e) pour mettre à jour les coordonnées de coupe de l'étape g).

3. Procédé pour séparer des pièces de fonderie (14) des grappes selon la revendication 1, **caractérisé en ce que** le système de séparation positionné dans la deuxième zone de travail (z2) est manipulé par le premier manipulateur industriel (2), la deuxième zone de travail (z2) étant à l'extérieur du système de transporteur (1) utilisé pour déplacer la grappe (3) de la première zone de travail (z1) à la deuxième zone de travail (z2) ;
et **en ce qu'**il comprend les étapes suivantes :
k) définir un troisième système de références spatiales (X", Y", Z") pour un second manipulateur industriel (7) qui manipule un outil de préhension (9) dans une troisième zone de travail (z3) et mettre en corrélation le troisième système de références spatiales (X", Y", Z") du second manipulateur (7) avec le premier système de références spatiales (X, Y, Z) du premier système de vision informatique (4) selon les distances (x1, y1, z1) les séparant et l'orientation de chaque axe ;
l) stocker des données correspondant à un élément de préhension (15d), comprenant des données du point de préhension pour saisir la grappe de fonderie (3) et la face de la grappe ;
et **en ce qu'**il comprend les étapes suivantes, après l'étape e) et avant l'étape i), :
m) traiter l'image de la grappe obtenue par le premier système de vision informatique (4) à l'étape e) pour obtenir l'orientation de la grappe, la face de la grappe et le point de préhension selon les données de l'image de l'étape e) et les données stockées à l'étape l) ;
n) convertir les coordonnées de préhension et l'orientation de la grappe de l'étape m) du premier système de références spatiales (X, Y, Z) du premier système de vision informatique (4) en troisième système de références spatiales (X", Y", Z") du second manipulateur industriel (7) ;
o) transmettre les coordonnées de préhension, la face de la grappe et l'orientation de la grappe de l'étape m) au second manipulateur industriel (7) pour saisir la grappe avec l'élément de préhension (15d) ;
p) saisir et retourner la grappe selon la face de la grappe (3) au moyen de l'outil de préhension (9) du second manipulateur industriel (7) en fonction des coordonnées de l'étape n), dans la troisième zone de travail (z3) ;
q) positionner la grappe (3) sur la deuxième zone de travail (z2) pour placer la grappe dans une position et une orientation déterminées ;
et **en ce qu'**il comprend les étapes suivantes après l'étape e) et avant l'étape g) :
r) mettre à jours les coordonnées des points de coupe, l'orientation des pièces et l'angle entrant selon la face de la grappe et faisant référence aux coordonnées de préhension du premier système de vision informatique (4) ;
et **en ce qu'**il comprend déplacer la grappe (3) de la première zone de travail (z1) à la troisième zone de travail (z3) au moyen d'un système de transporteur et obtenir l'image au moyen du premier système de vision informatique (4) à l'étape e) est réalisée une fois que la grappe a été placée à l'étape d) et avant l'étape de préhension p) dans la troisième zone de travail (z3), et **en ce qu'**il comprend mettre à jour les coordonnées de préhension de l'étape n) selon l'avancement de la grappe (3) sur le système de transporteur (1).

4. Procédé pour séparer des pièces de fonderie (14) des grappes selon la revendication 1, **caractérisé en ce que** le système de séparation positionné dans la deuxième zone de travail (z2) est manipulé par le premier manipulateur industriel (2), la deuxième zone de travail (z2) étant à l'extérieur du système de transporteur (1) ;
et **en ce qu'**il comprend les étapes suivantes :
k1) définir un troisième système de références spatiales (X", Y", Z") pour un second manipulateur industriel (7) qui manipule un outil de préhension (9) dans une troisième zone de travail (z3), définir un quatrième système de références spatiales (X"', Y"', Z"') pour un second système de vision informatique (12) qui est agencé entre la première zone de travail (z1) et la troisième zone de travail (z3), et mettre en corrélation les deux systèmes de références selon les distances (x1, y1, z1) les séparant et l'orientation de chaque axe ;
l1) stocker des données correspondant à un élément de préhension (15d), comprenant des données du point de préhension pour saisir la grappe de fonderie (3) et la face de la grappe ;
et **en ce qu'**il comprend les étapes suivantes, après l'étape d) et avant l'étape e) :
m1) obtenir une image de la grappe de fonderie (3) au moyen du second système de vision informatique (12) ;
n1) traiter l'image de la grappe obtenue par le second système de vision informatique (12) à l'étape m1) pour obtenir la face de la grappe, l'orientation de la grappe et les coordonnées du point de préhension selon les données de l'image de l'étape m1) et les données stockées à l'étape l1) ;
o1) convertir les coordonnées du point de préhension et de l'orientation de la grappe de l'étape n1) du quatrième système de références spatiales (X"', Y"', Z"') du second système de vision informatique (12) en troisième système de références spatiales (X", Y", Z") du second manipulateur industriel (7) ;
p1) transmettre les coordonnées calculées à o1), l'orientation de la grappe et la face de la grappe au second manipulateur industriel (7) pour saisir la grappe (3) au point de préhension ;
q1) saisir et retourner la grappe selon la face de la grappe (3) au moyen de l'outil de préhension (9) du second manipulateur industriel (7) en fonction des coordonnées de l'étape o1), dans la troisième zone de travail (z3) ;
r1) positionner la grappe (3) sur la deuxième zone de travail (z2) dans une orientation indéterminée ;
et **en ce qu'**il comprend déplacer la grappe (3) de la première zone de travail (z1) à la troisième zone de travail (z3) au moyen d'un système de transporteur (1) et **en ce que** obtenir l'image au moyen du second système de vision informatique (12) à l'étape m1) est réalisée une fois que la grappe a été placée à l'étape d) et avant l'étape de préhension q1) dans la troisième zone de travail (z3), et **en ce que** obtenir l'image au moyen du premier système de vision informatique (4) à l'étape e) est réalisée dans la deuxième zone de travail (z2) après l'étape r1) et avant la séparation de l'étape j) et **en ce qu'**il comprend mettre à jour les coordonnées de préhension de l'étape o1) selon l'avancement de la grappe (3) sur le système de transporteur (1).

5. Procédé pour séparer des pièces de fonderie (14) selon la revendication 1, **caractérisé en ce que** le système de séparation positionné dans la deuxième zone de travail (z2) est supporté par une structure (10) et le premier manipulateur industriel (2) manipule un outil de préhension (9) ;
et **en ce qu'**il comprend en outre les étapes suivantes :
k2) définir un quatrième système de références spatiales (X"', Y"', Z"') positionné à l'origine du système de séparation pour le premier manipulateur industriel (2) ;
12) stocker des données correspondant à un élément de préhension (15d), comprenant des données du point de préhension pour saisir la grappe de fonderie (3) et la face de la grappe ;
et **en ce qu'**il comprend les étapes suivantes après l'étape e) et avant l'étape g) :
m2) traiter l'image de la grappe obtenue par le premier système de vision informatique (4) à l'étape e) pour obtenir la face de la grappe, l'orientation de la grappe et le point de préhension selon les données de l'image de l'étape e) et les données stockées à l'étape l2) ;
n2) convertir les coordonnées de préhension et l'orientation de la grappe de l'étape m2) du premier système de références spatiales (X, Y, Z) du premier système de vision informatique (4) en deuxième système de références spatiales (X', Y', Z') du premier manipulateur industriel (2) ;
o2) transmettre les coordonnées de préhension, la face de la grappe et l'orientation de la grappe au premier manipulateur industriel pour saisir la grappe par l'élément de préhension (15d) ;
p2) saisir et retourner la grappe (3) selon la face de la grappe au moyen de l'outil de préhension (9) manipulé par le premier manipulateur industriel (2) en fonction des coordonnées de l'étape n2) dans une troisième zone de travail (z3) ;
et **en ce qu'**il comprend l'étape suivante après l'étape g) et avant l'étape i) :
q2) convertir les coordonnées des points de coupe, de l'orientation des pièces et de l'angle entrant du deuxième système de références spatiales (X', Y', Z') du premier manipulateur industriel (2) en quatrième système de références spatiales (X"', Y"', Z"') du premier manipulateur industriel (2) faisant référence au système de séparation ;
et **en ce qu'**il comprend l'étape suivante, après l'étape i) et avant l'étape j) :
r2) positionner les points de séparation pour séparer la grappe (3) sous le système de séparation dans la deuxième zone de travail (z2) selon les coordonnées de séparation, l'orientation des pièces et l'angle entrant ;
et **en ce qu'**il comprend déplacer la grappe (3) de la première zone de travail (z1) à la troisième zone de travail (z3) au moyen d'un système de transporteur et obtenir l'image au moyen du premier système de vision informatique (4) à l'étape e) est réalisée une fois que la grappe a été placée à l'étape d) et avant l'étape de préhension p2) dans la troisième zone de travail (z3) et **en ce qu'**il comprend mettre à jour les coordonnées de préhension de l'étape n2) selon l'avancement de la grappe (3) sur le système de transporteur (1).

6. Procédé pour séparer des pièces de fonderie (14) selon la revendication 1, **caractérisé en ce que** le système de séparation positionné dans la deuxième zone de travail (z2) est supporté par une structure (10) et le premier manipulateur industriel (2) manipule un outil de préhension ;
et **en ce qu'**il comprend les étapes suivantes :
k3) définir un troisième système de références spatiales (X", Y", Z") pour un second système de vision informatique (12) qui est agencé entre la première zone de travail (z1) et une troisième zone de travail (z3) et mettre en corrélation le troisième système de références spatiales (X", Y", Z") du second système de vision informatique (12) avec le deuxième système de références spatiales (X', Y', Z') du premier manipulateur industriel (2) selon les distances (x1, y1, z1) les séparant et l'orientation de chaque axe, et définir un quatrième système de références spatiales (X"', Y"', Z"') positionné à l'origine du système de séparation pour le premier manipulateur industriel (2) ;
l3) stocker des données correspondant à un élément de préhension (15d), comprenant les données du point de préhension pour saisir la grappe de fonderie (3) et la face de la grappe ;
et **en ce qu'**il comprend les étapes suivantes, après l'étape d) et avant l'étape e) :
m3) obtenir une image de la grappe de fonderie (3) au moyen du second système de vision informatique (12) ;
n3) traiter l'image de la grappe obtenue par le second système de vision informatique (12) à l'étape m3) pour obtenir la face et l'orientation de la grappe et les coordonnées du point de préhension selon les données de l'image de l'étape m3) et les données stockées à l'étape l3) ;
o3) convertir les coordonnées du point de préhension et l'orientation de la grappe du troisième système de références spatiales (X", Y", Z") du second système de vision informatique (12) en deuxième système de références spatiales (X', Y', Z') du premier manipulateur industriel (2) ;
p3) transmettre les coordonnées de préhension, la face de la grappe et l'orientation de la grappe au premier manipulateur industriel (2) pour saisir la grappe par l'élément de préhension (15d) ;
q3) saisir et retourner la grappe selon la face de la grappe (3) au moyen de l'outil de préhension (9) manipulé par le premier manipulateur industriel (2) en fonction des coordonnées de l'étape o3) dans une troisième zone de travail (z3) ;
et **en ce qu'**il comprend après l'étape g) et avant l'étape i), l'étape :
r3) convertir les coordonnées des points de coupe, de l'orientation des pièces et de l'angle entrant du deuxième système de références spatiales (X', Y', Z') du premier manipulateur industriel (2) en quatrième système de références spatiales (X"', Y"', Z"') du premier manipulateur industriel (2) faisant référence au système de séparation ;
et **en ce qu'**il comprend l'étape suivante, après l'étape i) et avant l'étape j), :
s3) positionner les points de séparation pour séparer la grappe (3) sous le système de séparation dans la deuxième zone de travail (z2) selon les coordonnées de séparation, l'orientation des pièces et l'angle entrant de l'étape r3) ;
et **en ce qu'**il comprend déplacer la grappe (3) de la première zone de travail (z1) à la troisième zone de travail (z3) au moyen d'un système de transporteur (1), **en ce que** obtenir l'image au moyen du second système de vision informatique (12) à l'étape m3) est réalisée une fois que la grappe a été placée à l'étape d) et avant l'étape de préhension q3) dans la troisième zone de travail (z3), **en ce que** obtenir l'image au moyen du premier système de vision informatique (4) à l'étape e) est réalisée dans la deuxième zone de travail (z2) après l'étape q3) et avant la séparation de l'étape j), et **en ce qu'**il comprend mettre à jour les coordonnées de préhension de l'étape o3) selon l'avancement de la grappe (3) sur le système de transporteur (1).

7. Procédé pour séparer des pièces de fonderie (14) des grappes selon l'une quelconque des revendications précédentes, **caractérisé en ce qu'**il comprend, après l'étape de transmission de données i), la modification par un opérateur des coordonnées d'orientation et de coupe de chaque pièce et de l'angle entrant de l'outil de coupe.

8. Procédé pour séparer des pièces de fonderie (14) des grappes selon l'une quelconque des revendications précédentes, **caractérisé en ce que** le système de séparation contient plus d'un outil de séparation (8) qui permet de séparer plusieurs pièces en une seule opération.

9. Procédé selon la revendication 8, **caractérisé en ce que** le système de séparation comprend des outils de séparation dynamiques comprenant des éléments supplémentaires permettant leur déplacement dans différents degrés de liberté.
